# EUROPEAN PATENT APPLICATION

(11) **EP 3 006 294 A1**
(43) Date of publication of application: **13.04.2016**
(21) Application number: 14803597.5
(22) Date of filing: 14.03.2014
(51) Int. Cl.: B60W 30/09, B60R 21/00, G08G 1/16

(54) **VEHICLE CONTROL DEVICE**

(30) Priority: 31.05.2013 JP 2013116046; 26.09.2013 JP 2013200294
(71) Applicant: Hitachi Automotive Systems, Ltd., Hitachinaka-shi Ibaraki 312-8503 (JP)
(72) Inventor: SHIMIZU Ryosuke, Hitachinaka-shi Ibaraki 312-8503 (JP)
(74) Representative: MERH-IP Matias Erny Reichl Hoffmann Patentanwälte PartG mbB
(86) International application number: PCT/JP2014/056821
(87) International publication number: WO 2014/192370

(57) **Abstract**

When own vehicle starts and accelerates involving course-change, the own vehicle is started with appropriate timing, and changes a course safely and swiftly. The vehicle control apparatus (1) includes externality recognizing means (2) that recognizes a moving body (C1, P1) and a road shape around the own vehicle (100), and that calculates a position, a moving direction and moving speed of the moving body, estimating means (6) for specifying an intersection position (Xc1 and Xp1) between an expected course (r) of the own vehicle and an expected course (Rc1, Rp1) of the moving body, acceleration pattern producing means (7) for producing a plurality of acceleration patterns (f(t), F(t), f(t + Ts), F(t+Ts)), acceleration pattern selecting/setting means (8) for selecting and setting one of the plurality of acceleration patterns in which the own vehicle and the moving body do not pass the intersection position at the same time, and vehicle driving means (9) for starting and accelerating the own vehicle based on the selected and set acceleration pattern.

## Description

### Technical Field

The present invention relates to a control apparatus for controlling a vehicle, and more particularly, to a vehicle control apparatus for controlling start and acceleration accompanied by course-change of own vehicle for example.

### Background Art

Conventionally, as a drive assist device for assisting drive of a vehicle, there is proposed an apparatus for easily perceptibly notifying an unperceivable driver of expected future danger, for making the driver to drive in accordance with warning content, and for enhancing prevention/safety performance (see PTL 1 for example).

According to the drive assist device of PTL 1, when own vehicle tries to turn to the right at an intersection at the intersection, the own vehicle and the oncoming vehicle which are traffic environments are displayed on a display unit. Further, current position of the own vehicle and the oncoming vehicle are displayed on the display unit, a right turn running locus of the own vehicle and a running locus of the oncoming vehicle are displayed with arrow lines, and an icon is displayed at an intersection position between the running locus of the own vehicle and a running locus of the oncoming vehicle. By displaying the icon on the display unit, even if the driver's attentiveness of the own vehicle with respect to the oncoming vehicle is insufficient, it is possible to easily and clearly notify the driver of high possibility of collision against the oncoming vehicle if right turn is started as it is. According to this, it is possible to effectively function the driving assisting function to prevent an accident and to enhance the prevention/safety performance.

### Citation List

### Patent Literature

PTL 1: JP 2010-188981 A

### Summary of Invention

### Technical Problem

However, the conventional technique depends, on a driver, starting timing of the own vehicle at the time of right turn. Hence, when the own vehicle makes right turn between oncoming vehicles at an intersection having a heavy traffic quantity, even though it is easy for a skilled driver to safely turn to the right, an inexperienced driver cannot take appropriate timing, and it takes time for turning to the right in some cases. Further, at the time of right turn at the intersection, if a driver is preoccupied with timing for starting own vehicle, there is a fear that the driver cannot sufficiently check a pedestrian who is crossing the intersection and the own vehicle comes into contact with the pedestrian.

The present invention is achieved in view of the above circumstances, and it is an object of the invention to provide a vehicle control apparatus capable of starting own vehicle at appropriate timing when the own vehicle changes a course involving start of the own vehicle, and capable of safely and swiftly change a course.

### Solution to Problem

To achieve the above object, a vehicle control apparatus of the present invention for controlling start and acceleration involving course-change of own vehicle includes externality recognizing means that recognizes a moving body and a road shape around the own vehicle and that calculates a position, a moving direction and moving speed of the moving body, estimating means that specifies an intersection position between an expected course of the own vehicle and an expected course of the moving body by estimating a course of the own vehicle based on the road shape and estimating a course of the moving body based on the position and the moving direction of the moving body, acceleration pattern producing means having an acceleration pattern as an acceleration waveform when the own vehicle starts, and vehicle driving means that starts and accelerates the own vehicle based on the acceleration pattern. Further, a vehicle control apparatus of the present invention for controlling start and acceleration involving course-change of own vehicle includes externality recognizing means that recognizes a position, a moving direction and moving speed of a moving body around the own vehicle, and a road shape, estimating means that estimates an intersection position between an expected course of the own vehicle based on the road shape and an expected course of the moving body based on the position and the moving direction of the moving body, acceleration pattern producing means that produces an acceleration pattern which is an acceleration waveform when the own vehicle starts, acceleration pattern selecting/setting means that selects or sets the acceleration pattern so that the own vehicle and the moving body do not pass the intersection position at the same time based on the expected course and the acceleration pattern of the own vehicle and the expected course and the moving speed of the moving body, and vehicle driving means that starts and accelerates the own vehicle based on the selected or set acceleration pattern selected or set by the acceleration pattern selecting/setting means.

### Advantageous Effects of Invention

According to the vehicle control apparatus of the present invention, when the own vehicle starts involving course-change, the vehicle driving means automatically starts and accelerates the own vehicle with timing capable of avoiding possibility of collision against the moving body based on a preset acceleration pattern, and a course can be changed safely and swiftly. Further, when the own vehicle starts involving course-change, the vehicle driving means automatically starts and accelerates the own vehicle based on an acceleration pattern capable of avoiding collision between the own vehicle and the moving body, thereby starting the own vehicle with appropriate timing, and changing a course safely and swiftly.

### Brief Description of Drawings

[FIG. 1] FIG. 1 is a schematic plan view of a vehicle provided with a vehicle control apparatus according to a first embodiment of the present invention and peripheral circumstances around the vehicle.
[FIG. 2] FIG. 2 is a control block diagram of the vehicle control apparatus shown in FIG. 1.
[FIG. 3] FIG. 3 is a graph showing an acceleration pattern produced by acceleration pattern producing means shown in FIG. 2.
[FIG. 4] FIG. 4 is a flowchart of start/acceleration control of the vehicle carried out by the vehicle control apparatus shown in FIG. 2.
[FIG. 5] FIG. 5 is a flowchart showing Example 1 of acceleration pattern setting shown in FIG. 4.
[FIG. 6] FIG. 6 is a flowchart showing Example 2 of acceleration pattern setting shown in FIG. 4.
[FIG. 7] FIG. 7 is a flowchart showing Example 3 of acceleration pattern setting shown in FIG. 4.
[FIG. 8] FIG. 8 is a flowchart showing Example 4 of acceleration pattern setting shown in FIG. 4.
[FIG. 9] FIG. 9 is a flowchart showing a modification of start/acceleration control shown in FIG. 4.
[FIG. 10] FIG. 10 is a flowchart showing start/acceleration control of a vehicle carried out by a vehicle control apparatus according to a second embodiment of the present invention.
[FIG. 11] FIG. 11 is a flowchart showing start/acceleration control of the vehicle carried out by the vehicle control apparatus of the second embodiment.
[FIG. 12] FIG. 12 is a flowchart showing start/acceleration control of the vehicle carried out by the vehicle control apparatus of the second embodiment.
[FIG. 13] FIG. 13 is a conceptual diagram showing transition of a control state of the vehicle control apparatus of the second embodiment.

### Description of Embodiments

A vehicle control apparatus which is one embodiment of the present invention will be described below with reference to the drawings.

### [First Embodiment]

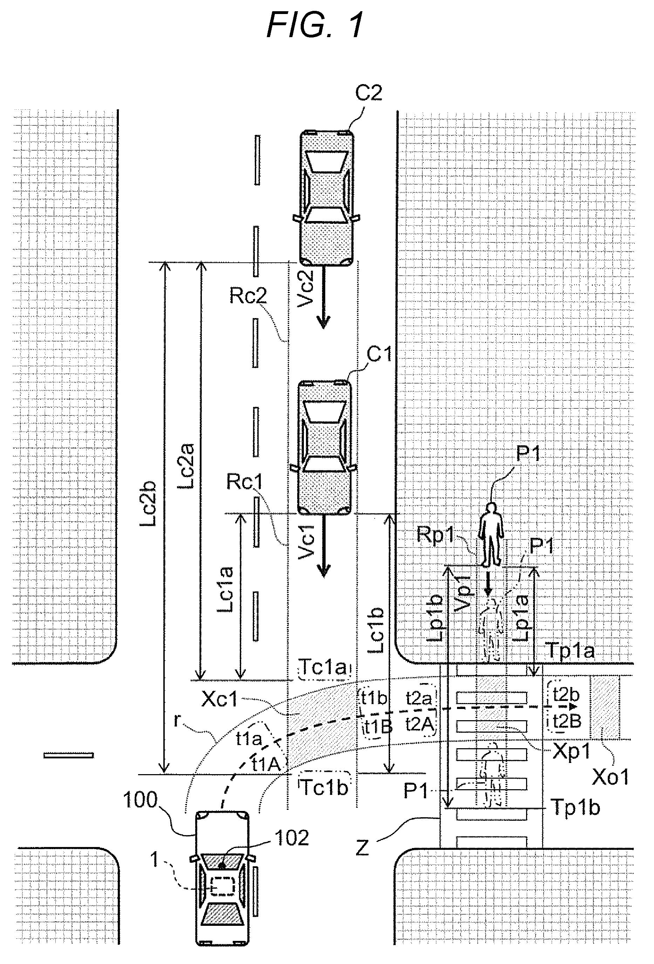

FIG. 1 is a schematic plan view of a vehicle provided with a vehicle control apparatus according to a first embodiment and peripheral circumstances around the vehicle. Own vehicle 100 is under suspension before an intersection for turning to the right at the intersection, and the own vehicle 100 is provided with the vehicle control apparatus 1. Oncoming vehicles C1 and C2 are running on an oncoming lane, and the oncoming vehicles C1 and C2 are approaching the intersection from the front of the own vehicle 100. There is a pedestrian crosswalk Z in front of the own vehicle 100 at the time of right turn, and a pedestrian P1 approaches the pedestrian crosswalk Z from the front of the own vehicle 100 to get across the intersection.

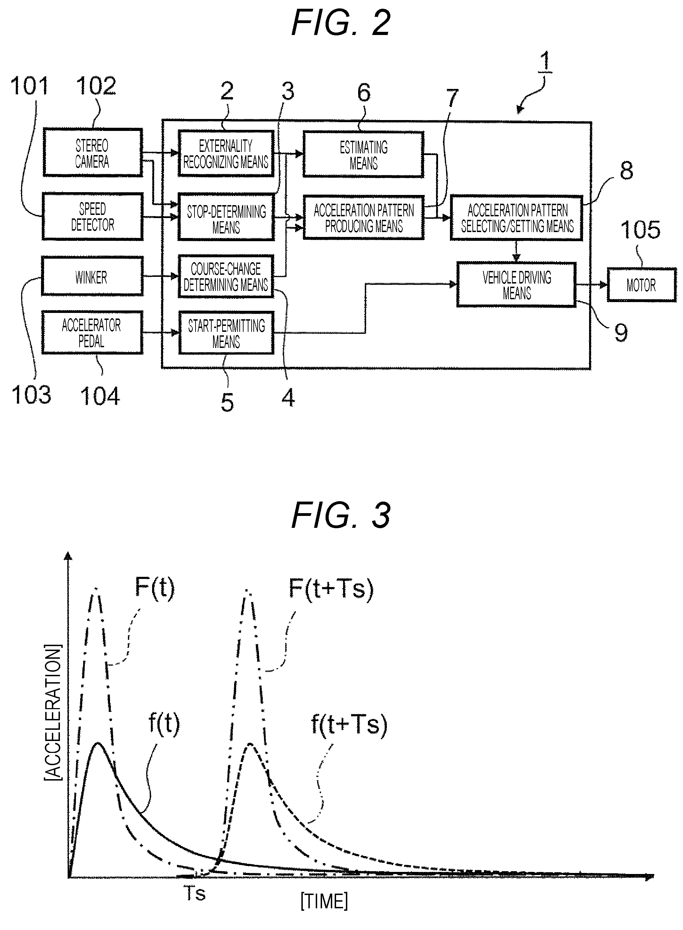

The own vehicle 100 includes a stereo camera 102 capable of shooting (taking a picture of) the front in the travelling direction at a predetermined angle range over a predetermined distance. Although it is not illustrated in FIG. 1, the vehicle 100 includes a speed detector 101 for detecting speed of own vehicle, a winker 103, an accelerator pedal 104 and a motor 105 as a power source as can be understood from FIG. 2. The vehicle control apparatus 1 provided in the own vehicle 100 controls start and acceleration involving course-change of the own vehicle 100 which temporary stops or slowly drives when the own vehicle 100 turns to the right at an intersection for example.

FIG. 2 is a control block diagram of the vehicle control apparatus 1. The vehicle control apparatus 1 mainly includes externality recognizing means 2, stop-determining means 3, course-change determining means 4, start-permitting means 5, estimating means 6, acceleration pattern producing means 7, acceleration pattern selecting/setting means 8 and vehicle driving means 9. Each of the means is composed of a single or a plurality of computer units, and data can be exchanged between the means through a communication bus which forms an in-vehicle network.

The externality recognizing means 2 calculates a direction of a detected object, a distance to the detected object and a size of the detected object based on image information which is input from the stereo camera 102, and the externality recognizing means 2 recognizes whether the detected object around the vehicle 100 is a vehicle, a pedestrian or an obstruction by pattern matching for example. As can be understood from FIG. 1, the externality recognizing means 2 calculates a relative position of these detected objects with respect to the vehicle 100, and recognizes, as moving bodies, moving oncoming vehicles C1, C2, ..., Cn and pedestrians P1, P2, ..., Pn based on time variation of the relative position. The externality recognizing means 2 calculates these moving directions, moving speed Vc1, Vc2, ..., Vcn and Vp1, Vp2, ..., Vpn based on time variation of the relative position of the moving oncoming vehicles C1, C2, ..., Cn and pedestrians P1, P2, ..., Pn recognized as the moving bodies. Further, the externality recognizing means 2 recognizes a road shape of the intersection in front of the own vehicle 100 in the travelling direction based on map information at a current position of the own vehicle 100 which is previously acquired based on a GPS or the like for example and/or based on image information of the stereo camera 102.

The stop-determining means 3 stop-determines whether the own vehicle 100 is under suspension based on own vehicle speed which is input from the speed detector 101 of the own vehicle 100 and/or image information of the stereo camera 102. In addition to the determination whether the vehicle is under suspension when speed of the own vehicle 100 is 0, the stop-determining means 3 may also determine that the vehicle is under suspension when the own vehicle 100 slowly drives for changing a course, e.g., for turning to the right at an intersection. The stop-determining means 3 determines that start/acceleration control of the own vehicle 100 should be permitted based on determination of stop of the own vehicle 100.

The course-change determining means 4 is permitting means that determines whether the start/acceleration control which is for starting and accelerating the own vehicle 100 should be permitted, and the course-change determining means 4 detects operation of a winker 103 by a driver of the own vehicle 100 when the winker 103 is operated, and determines whether the start/acceleration control should be permitted based on the operation. When the driver of the own vehicle 100 carries out operation for instructing a right direction by the winker 103 for example, the course-change determining means 4 detects this operation as permitting operation.

The start-permitting means 5 determines whether the start/acceleration control which is for starting and accelerating the own vehicle 100 should be permitted. Based on a signal when the driver of the own vehicle 100 operates the accelerator pedal 104, the start-permitting means 5 detects this operation, and determines whether the start/acceleration control should be permitted based on the operation. When the driver of the own vehicle 100 carries out acceleration operation for depressing the accelerator pedal 104 for example, the start-permitting means 5 detects this operation as permitting operation.

The estimating means 6 estimates an expected course r of the own vehicle 100, and expected courses Rc1, Rc2, ... , Rcn and Rp1, Rp2, ..., Rpn of the oncoming vehicles C1, C2, ..., Cn, and the pedestrians P1, P2, ..., Pn which are the moving bodies. That is, the estimating means 6 computes and calculates the expected course r of the own vehicle 100 based on a forward road shape of the own vehicle 100 recognized by the externality recognizing means 2 and based on a turning-instruction direction of the own vehicle 100 detected by the course-change determining means 5, thereby estimating them. Further, the estimating means 6 calculates an estimated position after arbitrary time is elapsed based on relative positions, with respect to the own vehicle 100, of the oncoming vehicles C1, C2, ..., Cn and the pedestrians P1, P2, ..., Pn calculated by the externality recognizing means 2 and the moving directions and the moving speed Vc1, Vc2, ..., Vcn and Vp1, Vp2, ..., Vpn. According to this, the estimating means 6 computes and calculates the expected courses Rc1, Rc2, ..., Rcn and Rp1, Rp2, ..., Rpn of the oncoming vehicles C1, C2, ..., Cn and the pedestrians P1, P2, ..., Pn, thereby estimating them. Further, the estimating means 6 computes and calculates intersection position Xc1, Xc2, ..., Xcn and Xp1, Xp2, ... , Xpn where the expected course r of the own vehicle 100, and expected courses Rc1, Rc2, ..., Rcn and Rp1, Rp2, ..., Rpn of the oncoming vehicles C1, C2, ..., Cn and the pedestrians P1, P2, ..., Pn intersect with each other, thereby estimating them.

The acceleration pattern producing means 7 produces an acceleration pattern which is an acceleration waveform at the time of the start/acceleration control of the own vehicle 100. FIG. 3 is a graph showing one example of the acceleration pattern produced by the acceleration pattern producing means 7, a lateral axis shows time and a vertical axis shows acceleration. The acceleration pattern producing means 7 produces an acceleration pattern f (t) at the time of normal acceleration and start and a strong acceleration pattern F(t) at the time of strong acceleration start, and a delay acceleration pattern f (t + Ts) and a delay strong acceleration pattern F (t + Ts) which are obtained by delaying the above patterns by delay time Ts. The driver may select whether the strong acceleration pattern F (t) and the delay strong acceleration pattern F (t + Ts) should be used. The driver may set sizes of waveforms of the acceleration patterns f(t), f(t + Ts), F(t) and F (t + Ts).

The acceleration pattern selecting/setting means 8 selects and sets an acceleration pattern from the acceleration patterns f(t), F(t), f(t + Ts) and F(t + Ts) produced by the acceleration pattern producing means 7 so that the own vehicle 100 and the oncoming vehicles C1, C2, ..., Cn and/or the pedestrians P1, P2, ..., Pn which are moving bodies do not pass the estimated intersection position Xc1, Xc2, ..., Xcn and Xp1, Xp2, ... , Xpn estimated by the estimating means 6 at the same time, i.e., so that the own vehicle 100 and the moving bodies do not collide against each other. Determination of danger of collision between the own vehicle 100 and the moving body is made based on the expected course r of the own vehicle 100, the expected courses and moving speed of the moving bodies. That is, danger of collision is determined based on the expected course r of the own vehicle 100, the acceleration patterns f(t), F(t), f(t + Ts) and F(t + Ts), and the expected course Rc1, Rc2, ... , Rcn and Rp1, Rp2, ..., Rpn and the moving speed Vc1, Vc2, ... , Vcn and Vp1, Vp2, ... , Vpn of the moving bodies. Selection and setting of the acceleration pattern carried out by the acceleration pattern selecting/setting means 8 will be described in detail using a later-described Examples.

When selecting the acceleration pattern, the acceleration pattern selecting/setting means 8 calculates arrival time Tc1a, Tc2a, ..., Tcna and Tpla, Tp2a, ..., Tpna required until the own vehicle arrives at the intersection positions Xc1, Xc2, ..., Xcn and Xp1, Xp2, ..., Xpn, and calculates passing time Tclb, Tc2b, ..., Tcnb and Tplb, Tp2b, ..., Tpnb required until the own vehicle passes the intersection positions Xc1, Xc2, ..., Xcn and Xp1, Xp2, ..., Xpn of each of oncoming vehicles C1, C2, ..., Cn and pedestrians P1, P2, ..., Pn which are moving bodies based on the relative positions, the moving directions and the moving speed Vc1, Vc2, ... , Vcn and Vp1, Vp2, ..., Vpn. That is, in the illustrated example, a distance Lc1a through which the oncoming vehicle C1 arrives at the intersection position Xc1 is divided by speed Vc1 of the oncoming vehicle C1, thereby calculating the arrival time Tc1a of the oncoming vehicle C1 (Tc1a = Lc1a/Vc1). A distance Lclb through which the oncoming vehicle C1 passes the intersection position Xc1 is divided by speed Vc1 of the oncoming vehicle C1, thereby calculating passing time Tclb of the oncoming vehicle C1 (Tclb = Lc1b/Vc1). Similarly, arrival time Tc2a (= Lc2a/Vc2) and passing time Tc2a (= Lc2b/Vc2) of the vehicle C2, and arrival time Tpla (= Lp1a/Vp1) and passing time Tplb (= Lp1b/Vp1) of the pedestrian PI are calculated.

When the acceleration pattern selecting/setting means 8 selects and sets an acceleration pattern, the acceleration pattern selecting/setting means 8 calculates arrival time t1a, t2a, ..., tna required until the own vehicle 100 arrives at intersection positions Xc1, Xc2, ..., Xcn and Xp1, Xp2, ... , Xpn, and calculates passing time t1b, t2b, ..., tnb required until the own vehicle 100 passes intersection positions Xc1, Xc2, ..., Xcn and Xp1, Xp2, ... , Xpn. That is, in the example shown in FIG. 1, the acceleration pattern selecting/setting means 8 calculates arrival time t1a required until the own vehicle 100 arrives at the intersection position Xc1 with respect to the oncoming vehicle C1 and passing time t1b required until the own vehicle 100 passes the intersection position Xc1 based on an estimated running distance extending along the expected course r of the own vehicle 100 and the acceleration pattern f (t) at the time of normal acceleration start. Similarly, the acceleration pattern selecting/setting means 8 calculates arrival time t2a required until the own vehicle 100 arrives at the intersection position Xp1 with respect to the pedestrian P1, and passing time t2b required until the own vehicle 100 passes the intersection position Xp1.

Further, when the acceleration pattern is selected and set, the acceleration pattern selecting/setting means 8 calculates shortened arrival time t1A, t2A, ..., tnA at which the own vehicle 100 arrives at the intersection positions Xc1, Xc2, ... , Xcn and Xp1, Xp2, ..., Xpn when the strong acceleration pattern F(t) carries out the start/acceleration control of the own vehicle 100, and calculates shortened passing time t1B, t2B, ..., tnB required until the own vehicle 100 passes the intersection position Xc1, Xc2, ..., Xcn and Xp1, Xp2, ..., Xpn based on the estimated running distance extending along the expected course r of the own vehicle 100 and the strong acceleration pattern F(t). That is, in the example shown in FIG. 1, the acceleration pattern selecting/setting means 8 calculates the arrival time t1a required until the own vehicle 100 arrives at the intersection position Xc1 with respect to the oncoming vehicle C1 and the passing time t1b required until the own vehicle 100 passes the intersection position Xc1 based on an estimated running distance extending along the expected course r of the own vehicle 100 and the strong acceleration pattern F(t). Similarly, the acceleration pattern selecting/setting means 8 calculates arrival time t2A required until the own vehicle 100 arrives at the intersection position Xp1 with respect to the pedestrian P1, and the passing time t2B required until the own vehicle 100 passes the intersection position Xp1.

While taking the safety of the pedestrian P1 into account, arrival time t2a and t2A may be calculated based on a running distance through which the own vehicle 100 arrives at the pedestrian crosswalk Z instead of based on a running distance through which the own vehicle 100 arrives at the intersection position Xp1. Similarly, the passing time t2b and t2B may be calculated based on a running distance through which the own vehicle 100 passes the pedestrian crosswalk Z instead of based on the running distance through which the own vehicle 100 passes the intersection position Xp1. That is, the pedestrian P1 may not enter the pedestrian crosswalk Z until the pedestrian P1 gets across the expected course r of the own vehicle 100, or the own vehicle 100 may pass the pedestrian crosswalk Z before the own vehicle 100 arrives at the intersection position Xp1.

The vehicle driving means 9 drives the motor 105 as the power supply of the vehicle 100, thereby starting the own vehicle 100 and accelerating the vehicle 100 based on the acceleration pattern f(t), F(t), f (t + Ts) or F (t + Ts) which is selected and set by the acceleration pattern selecting/setting means 8.

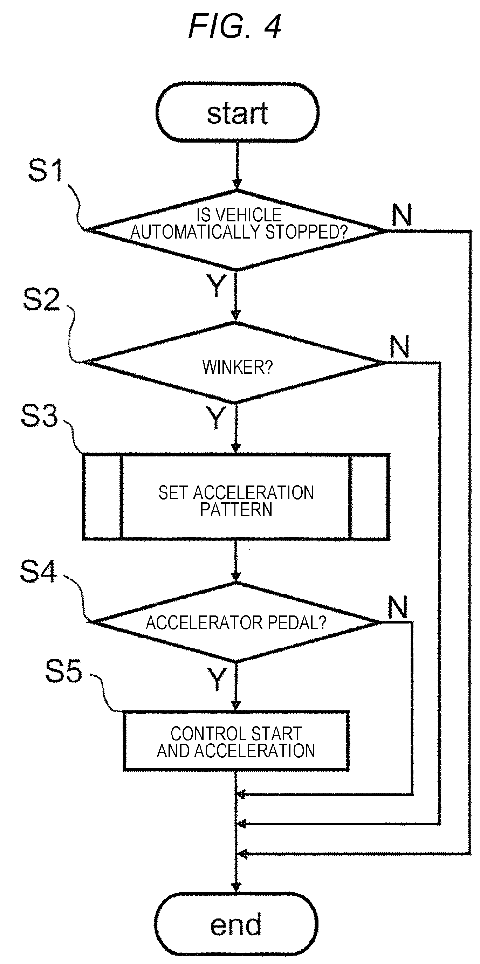

A summary of the start/acceleration control of the own vehicle 100 carried out by the vehicle control apparatus 1 of the embodiment based on the above-described configuration will be described using FIGS. 1 and 4. FIG. 4 is a flowchart showing main processing of the start/acceleration control of the own vehicle 100 carried out by the vehicle control apparatus 1 of the embodiment.

As shown in FIG. 1, if the own vehicle 100 stops or slowly drives for turning to the right at the intersection, the stop-determining means 3 of the vehicle control apparatus 1 determines "stop" (Y) in determination processing S1, and the procedure proceeds to determination processing S2. If the own vehicle 100 does not stop or drive slowly on the other hand, i.e., when the own vehicle 100 does not turn to the right at the intersection and drives straightly, or when there is no oncoming vehicle or pedestrian or when a right turn signal is blue, the stop-determining means 3 determines "no automatic stop" (N) in the determination processing S1, and the vehicle control apparatus 1 completes the processing without carrying out the start/acceleration control of the own vehicle 100. Alternatively, the processing returns to the determination processing S1, and the automatic stop is determined again.

In determination processing S2, if the drivers carries out operation for permitting to instruct the right direction by the winker 103 or the driver already carried out this permitting operation before the intersection in a state where the own vehicle 100 stops or slowly drives, the course-change determining means 4 determines there is the permitting operation by the winker 103 of the driver of the own vehicle 100 (Y), and the processing proceeds to processing S3. If the driver of the vehicle 100 determines to cancel the right turn and does not operate the winker 103 or if the driver carries out operation to instruct the left direction, the course-change determining means 4 determines that there is no permitting operation by the winker 103 of the driver (N), and the vehicle control apparatus 1 completes the processing without carrying out the start/acceleration control of the own vehicle 100 in determination process S2. Alternatively, the processing returns to the determination processing S1, and automatic stop is again determined.

In processing S3, the acceleration pattern producing means 7 produces the acceleration pattern f (t) at the time of the normal acceleration start and the strong acceleration pattern F (t) at the time of the strong acceleration start both shown in FIG. 3, and produces the delay acceleration pattern f(t + Ts) and the delay strong acceleration pattern F (t + Ts) which are obtained by delaying the above acceleration patterns by the predetermined delay time Ts. The estimating means 6 estimates the intersection position Xc1, Xc2, ..., Xcn and Xp1, Xp2, ..., Xpn. The acceleration pattern selecting/setting means 8 selects and sets the acceleration pattern f(t), F(t), f(t + Ts) or F (t + Ts) produced by the acceleration pattern producing means 7 so that the own vehicle 100 and the oncoming vehicles C1, C2, ..., Cn or the pedestrians P1, P2, ..., Pn do not pass the intersection position Xc1, Xc2, ..., Xcn and Xp1, Xp2, ..., Xpn at the same time, and the processing proceeds to processing S4. The selecting and setting operation of the acceleration patterns f(t), F(t), f (t + Ts) and F (t + Ts) will be described in detail using later-described Examples.

In determination processing S4, if the driver of the own vehicle 100 carries out acceleration operation to depress the accelerator pedal 104, the start-permitting means 5 detects this operation as permitting operation, determines that there is the permitting operation (Y), and processing proceeds to processing S5. If the driver of the own vehicle 100 does not have a will to start and the driver does not carry out the permitting operation to depress the accelerator pedal 104, the start-permitting means 5 determines that there is no permitting operation (N), and the vehicle control apparatus 1 completes the processing without carrying out the start/acceleration control of the own vehicle 100. Alternatively, the procedure returns to the determination processing S1, and the automatic stop is again determined.

In processing S5, the vehicle driving means 9 drives the motor 105 as the power source, and starts and accelerates the own vehicle 100 based on the acceleration patterns f(t), F(t), f(t + Ts) or F(t + Ts) set by the acceleration pattern selecting/setting means 8.

Next, the selection and setting of the acceleration pattern carried out by the acceleration pattern selecting/setting means 8 of the vehicle control apparatus 1 of the embodiment described above will be described in detailed based on Examples 1 to 4.

### (Example 1)

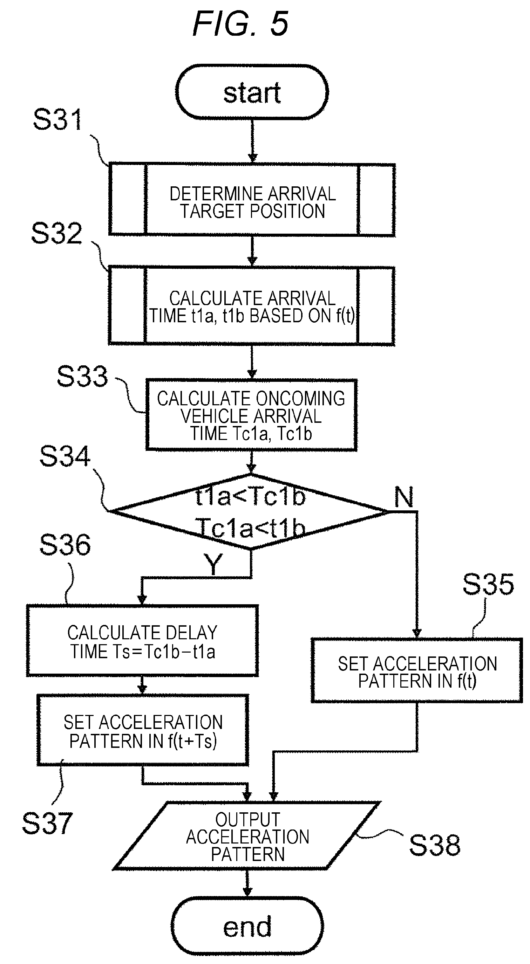

FIG. 5 is a control flowchart of Example 1 according to the setting of an acceleration pattern carried out by the acceleration pattern selecting/setting means 8 of the vehicle control apparatus 1 of the embodiment, and FIG. 5 shows details of the processing S3 shown in FIG. 4. The flowchart of the embodiment shown in FIG. 5 shows a processing flow when only the oncoming vehicle C1 exists at the intersection shown in FIG. 1 and other vehicles C2, ..., Cn and the pedestrians P1, P2, ..., Pn do not exist.

When only the oncoming vehicle C1 exists in FIG. 1, the acceleration pattern selecting/setting means 8 determines an arrival position where the own vehicle 100 arrives at the intersection position Xc1 shown in FIG. 1, and a passing position where the own vehicle 100 passes the intersection position Xc1 in an arrival target position of the own vehicle 100 in processing S31 shown in FIG. 5. In subsequent processing S32, the acceleration pattern selecting/setting means 8 calculates arrival time t1a required until the own vehicle 100 arrives at the intersection position Xc1 and passing time t1b required until the own vehicle 100 passes the intersection position Xc1 based on the acceleration pattern f(t) at the time of normal acceleration start produced by the acceleration pattern producing means 7 as described above. In subsequent processing S33, the acceleration pattern selecting/setting means 8 calculates the arrival time Tc1a required until the oncoming vehicle C1 arrives at the intersection position Xc1 and the passing time Tclb required until the oncoming vehicle C1 passes the intersection position Xc1 as described above.

In subsequent determination processing S34, the acceleration pattern selecting/setting means 8 determines whether the own vehicle 100 and the oncoming vehicle C1 pass the intersection position Xc1 at the same time, i.e., determines whether there is possibility that the own vehicle 100 and the oncoming vehicle C1 collide against each other. Specifically, when the arrival time t1a required until the own vehicle 100 arrives at the intersection position Xc1 is faster than the passing time Tclb when the oncoming vehicle C1 passes the intersection position Xc1 (t1a < Tc1b), and the passing time t1b when the own vehicle 100 passes the intersection position Xc1 is slower than the arrival time Tc1a when the oncoming vehicle C1 arrives at the intersection position Xc1 (Tc1a < t1b), the acceleration pattern selecting/setting means 8 determines that there is possibility that the own vehicle 100 and the oncoming vehicle C1 collide against each other (Y), and the procedure proceeds to processing S36.

In the processing S34, if t1a < Tclb and Tc1a < t1b are not established, the acceleration pattern selecting/setting means 8 determines that there is no possibility that the own vehicle 100 and the oncoming vehicle C1 collide against each other (N), and the procedure proceeds to processing S35. In other words, when the arrival time t1a of the own vehicle 100 is equal to or greater than the passing time t1b of the oncoming vehicle C1 (t1a ≥ Tc1b) or the arrival time Tc1a of the oncoming vehicle C1 is equal to or greater than the passing time t1b (Tc1a ≥ t1b) of the own vehicle 100, the acceleration pattern selecting/setting means 8 determines that there is no danger of collision between the own vehicle 100 and the oncoming vehicle C1 (N), and the procedure proceeds to processing S35.

In processing S35, the acceleration pattern selecting/setting means 8 selects and sets the acceleration pattern f(t) at the time of normal acceleration start which is produced by the acceleration pattern producing means 7 and which is used for calculating the arrival time t1a and passing time t1b of the own vehicle 100. That is, the acceleration pattern selecting/setting means 8 selects and sets the acceleration pattern f(t) under which the own vehicle 100 and the oncoming vehicle C1 do not pass the intersection position Xc1 at the same time from the acceleration pattern f(t), F(t), f(t + Ts) and F(t + Ts) produced by the acceleration pattern producing means 7, and the procedure proceeds to processing S38. In processing S38, the acceleration pattern selecting/setting means 8 outputs the acceleration pattern f(t) to the vehicle driving means 9.

According to this, in the processing S4 shown in FIG. 4, when the determination of the permitting operation of the accelerator pedal 104 by the start-permitting means 5 shows that there is permitting operation (Y), the vehicle driving means 9 starts and accelerates the own vehicle 100 in accordance with the acceleration pattern f(t) selected by the acceleration pattern selecting/setting means 8 in processing S5. At this time, the acceleration pattern f(t) of the own vehicle 100 by the vehicle driving means 9 is selected and set such that collision between the own vehicle 100 and the oncoming vehicle C1 can be avoided as described above. That is, the own vehicle 100 passes the intersection position Xc1 when or before the oncoming vehicle C1 arrives at the intersection position Xc1. Alternatively, the own vehicle 100 arrives at the intersection position Xc1 when or after the oncoming vehicle C1 passes the intersection position Xc1. Therefore, according to this embodiment, when the own vehicle 100 changes a course involving start and acceleration such as turning to the right at the intersection, the vehicle control apparatus 1 determines timing of start of the own vehicle 100, and the own vehicle 100 is started and accelerated with appropriate timing capable of avoiding collision between the own vehicle 100 and a moving body such as the oncoming vehicle C1, and it is possible to change a course safely and swiftly.

In the determination processing S34 on the other hand, if the acceleration pattern selecting/setting means 8 determines that there is possibility of collision with respect to the oncoming vehicle C1 (Y), i.e., when the arrival time t1a of the own vehicle 100 is faster than the passing time Tclb of the oncoming vehicle C1 (t1a < Tc1b) which is the moving body and the arrival time Tc1a of the oncoming vehicle C1 is slower than the passing time t1b of the own vehicle 100 (Tc1a < t1b), the procedure proceeds to processing S36.

In processing S36, the acceleration pattern selecting/setting means 8 calculates delay time Ts which is a difference between the passing time Tclb of the oncoming vehicle C1 which is the moving body and the arrival time t1a of the own vehicle 100. In subsequent processing S37, the acceleration pattern selecting/setting means 8 selects and sets, in the acceleration pattern, a delay acceleration pattern f(t + Ts) which is obtained by delaying the acceleration pattern f(t) at the time of normal acceleration start produced by the acceleration pattern producing means 7 by the delay time Ts. In subsequent processing S38, the acceleration pattern selecting/setting means 8 outputs the selected and set acceleration pattern f(t + Ts) to the vehicle driving means 9.

According to this, in the processing S4 shown in FIG. 4, if determination of the permitting operation of the accelerator pedal 104 by the start-permitting means 5 shows that there is permitting operation (Y), the vehicle driving means 9 carries out the start/acceleration control of the own vehicle 100 in processing S5, and the vehicle driving means 9 starts and accelerates the own vehicle 100. At this time, start and acceleration of the own vehicle 100 by the vehicle driving means 9 are carried out in accordance with of the selected and set acceleration pattern f(t + Ts). Hence, as shown in FIG. 3, the own vehicle 100 starts the start and acceleration at time delayed, by delay time Ts, from the acceleration pattern f (t) at which collision is determined as described above. According to this, the oncoming vehicle C1 passes the intersection position Xc1 when or before the own vehicle 100 arrives as the intersection position Xc1.

Therefore, according to this embodiment, when the own vehicle 100 changes a course involving start and acceleration such as turning to the right, the vehicle control apparatus 1 determines timing of start of the own vehicle 100, starts and accelerates the own vehicle 100 with appropriate timing capable of avoiding collision between the own vehicle 100 and the oncoming vehicle C1, and it is possible to change the course safely and swiftly.

### (Example 2)

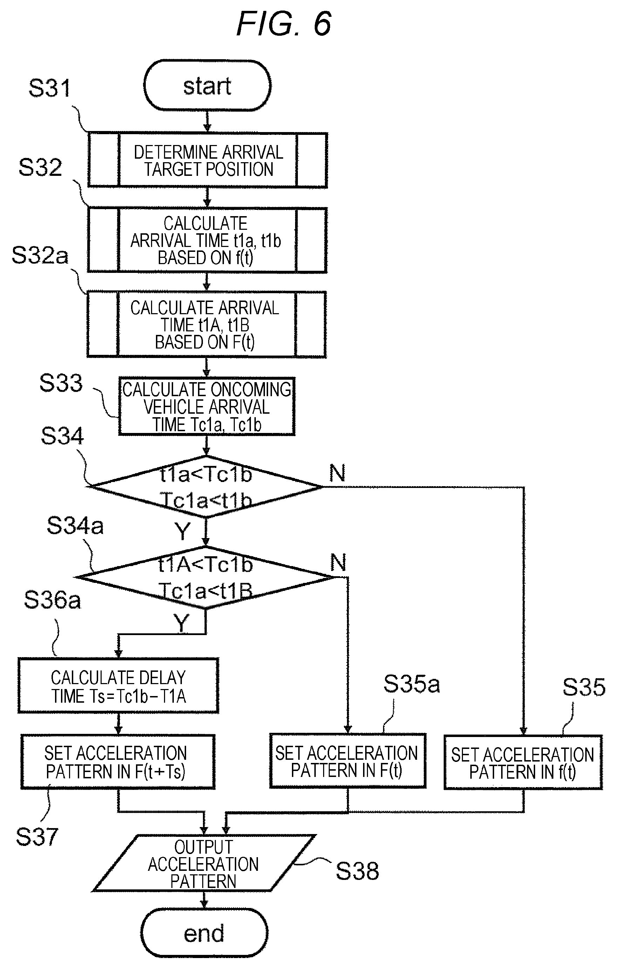

FIG. 6 is a control flowchart of Example 2 according to setting of an acceleration pattern by the acceleration pattern selecting/setting means 8 of the vehicle control apparatus 1 of the embodiment, and FIG. 6 shows details of the processing S3 shown in FIG. 4. In the processing flow of this Example 2, processing S32a, S34a and S35a are added to the processing flow of Example 1 shown in FIG. 5, and processing S36 is replaced by processing S36a. The flowchart of this Example shown in FIG. 6 shows a case where only the oncoming vehicle C1 exists at the intersection shown in FIG. 1 as in Example 1, and shows a case where the own vehicle 100 can carry out strong acceleration which is greater than normal acceleration.

When only the oncoming vehicle C1 exists in FIG. 1, the acceleration pattern selecting/setting means 8 determines an arrival target position of the own vehicle 100 in processing S31 shown in FIG. 6 as in Example 1, calculates arrival time t1a and passing time t1b in processing S32, and the procedure proceeds to the added processing S32a. In the processing S32a, the acceleration pattern selecting/setting means 8 calculates shortened arrival time t1A required until the own vehicle 100 arrives at the intersection position Xc1 and shortened passing time t1B required until the own vehicle 100 passes the intersection position Xc1 based on the strong acceleration pattern F(t) at the time of strong acceleration start produced by the acceleration pattern producing means 7 as described above. In subsequent processing S33, the acceleration pattern selecting/setting means 8 calculates arrival time Tc1a and passing time Tclb of the oncoming vehicle C1 as in Example 1, and the acceleration pattern selecting/setting means 8 determines whether there is possibility of collision between own vehicle 100 and the oncoming vehicle C1 in determination processing S34.

If the acceleration pattern selecting/setting means 8 determines that there is no possibility of collision with respect to the oncoming vehicle C1 in processing S34 (N), the acceleration pattern selecting/setting means 8 selects and sets, as it is, the acceleration pattern f(t) at the time of normal acceleration start as in Example 1 in subsequent processing S35, and the acceleration pattern selecting/setting means 8 outputs the acceleration pattern f (t) to the vehicle driving means 9 in subsequent processing S38.

According to this, the own vehicle 100 starts and accelerates in accordance with the acceleration pattern f (t) as in Example 1, and the own vehicle 100 passes the intersection position Xc1 when or before the oncoming vehicle C1 arrives at the intersection position Xc1. Alternatively, the own vehicle 100 arrives at the intersection position Xc1 when or after the oncoming vehicle C1 passes the intersection position Xc1. Therefore, according to this Example, as in Example 1, the own vehicle 100 is started and accelerated with appropriate timing capable of avoiding collision between the own vehicle 100 and a moving body such as the oncoming vehicle C1, and it is possible to change a course safely and swiftly.

On the other hand, if the acceleration pattern selecting/setting means 8 determines that there is possibility of collision with respect to the oncoming vehicle C1 (Y) in the processing S34, in Example 2, the procedure proceeds to determination processing S34a where possibility of collision between the own vehicle 100 and the oncoming vehicle C1 at the time of start/acceleration control by the strong acceleration pattern F(t) is determined. In the determination processing S34a, if the shortened arrival time t1A of the own vehicle 100 based on strong acceleration pattern F (t) is faster than the passing time Tclb of the oncoming vehicle C1 (t1A < Tc1b) and if the shortened passing time t1B of the own vehicle 100 based on the strong acceleration pattern F (t) is slower than the arrival time Tc1a of the oncoming vehicle C1 (Tc1a < t1B), the acceleration pattern selecting/setting means 8 determines that there is possibility of collision between the own vehicle 100 and the oncoming vehicle C1 (Y), and procedure proceeds to processing S36a.

In processing S34a, if the t1A < Tclb and Tc1a < t1B are not established on the other hand, the acceleration pattern selecting/setting means 8 determines that there is no possibility of collision with respect to the oncoming vehicle C1 (N), and procedure proceeds to processing S35a. In other words, if the shortened arrival time t1A of the own vehicle 100 is equal to or greater than the passing time t1b of the oncoming vehicle C1 which is the moving body (t1A ≥ Tc1b), or if the arrival time Tc1a of the oncoming vehicle C1 is equal to or greater than the shortened passing time t1B of the own vehicle 100 (Tc1a ≥ t1B), the acceleration pattern selecting/setting means 8 determines that there is no danger of collision between the own vehicle 100 and the oncoming vehicle C1 (N), and procedure proceeds to processing S35a.

In processing S35a, the acceleration pattern selecting/setting means 8 selects and sets, in the acceleration pattern, the strong acceleration pattern F(t) at the time of strong acceleration start produced by the acceleration pattern producing means 7. That is, the acceleration pattern selecting/setting means 8 selects and sets the acceleration pattern f(t) under which the own vehicle 100 and the oncoming vehicle C1 which is a moving body do not pass the intersection position Xc1 at the same time from the acceleration patterns f(t), F(t), f(t + Ts) and F(t + Ts) produced by the acceleration pattern producing means 7. In subsequent processing S38, the acceleration pattern selecting/setting means 8 outputs the strong acceleration pattern F(t) to the vehicle driving means 9.

According to this, if there is determination of permitting operation by the start-permitting means 5 in processing S4 shown in FIG. 4 (Y), the vehicle driving means 9 starts and accelerates the own vehicle 100 in accordance with the strong acceleration pattern F (t) in processing S5 as described above. At this time, the strong acceleration pattern F(t) of the own vehicle 100 by the vehicle driving means 9 is selected and set such that collision between the own vehicle 100 and the oncoming vehicle C1 can be avoided as described above. That is, the own vehicle 100 passes the intersection position Xc1 when or before the oncoming vehicle C1 arrives at the intersection position Xc1. Therefore, according to Example 2, when the own vehicle 100 changes a course involving start and acceleration such as turning to right at an intersection for example, the vehicle control apparatus 1 determines timing of start of the own vehicle 100 by two-stage acceleration, the own vehicle 100 is started and accelerated with appropriate timing capable of avoiding collision between the own vehicle 100 and a moving body such as the oncoming vehicle C1, and it is possible to change a course safely and swiftly.

When the acceleration pattern selecting/setting means 8 determines that there is possibility of collision with respect to the oncoming vehicle C1 in the determination processing S34a on the other hand (Y), if the shortened arrival time t1A of the own vehicle 100 is faster than the passing time Tclb of the oncoming vehicle C1 (t1A<Tc1b), and if the arrival time Tc1a of the oncoming vehicle C1 is faster than the shortened passing time t1B of the own vehicle 100 (Tc1a<t1B), procedure proceeds to processing S36a.

In processing S36a, the acceleration pattern selecting/setting means 8 calculates delay time Ts which is a difference between the passing time Tclb of the oncoming vehicle C1 and the shortened arrival time t1A of the own vehicle 100. In subsequent processing S37, the acceleration pattern selecting/setting means 8 selects and sets delay acceleration pattern F(t + Ts) which is obtained by delaying, by the delay time Ts, the strong acceleration pattern F(t) at the time of strong acceleration start produced by the acceleration pattern producing means 7. In subsequent processing S38, the acceleration pattern selecting/setting means 8 outputs the selected and set acceleration pattern F(t + Ts) to the vehicle driving means 9.

According to this, in the processing S4 shown in FIG. 4, if there is determination of permitting operation by the start-permitting means 5 (Y), vehicle driving means 9 carries out the start/acceleration control of the own vehicle 100 in processing S5 as described above, and the own vehicle 100 is started and accelerated. At this time, the vehicle driving means 9 starts and accelerates the own vehicle 100 in accordance with the selected and set acceleration pattern F (t + Ts). Hence, as shown in FIG. 3, the own vehicle 100 starts the start and acceleration at time delayed, by delay time Ts, from the acceleration pattern f(t) in which collision is determined as described above. According to this, the oncoming vehicle C1 passes the intersection position Xc1 when or before the own vehicle 100 the own vehicle 100 arrives at the intersection position Xc1. Therefore, according to Example 2, when the own vehicle 100 changes a course involving start and acceleration such as turning to right at an intersection for example, the vehicle control apparatus 1 determines timing of start of the own vehicle 100 by two-stage acceleration, the own vehicle 100 is started and accelerated with appropriate timing and acceleration capable of avoiding collision between the own vehicle 100 and a moving body such as the oncoming vehicle C1, and it is possible to change a course safely and swiftly.

### (Example 3)

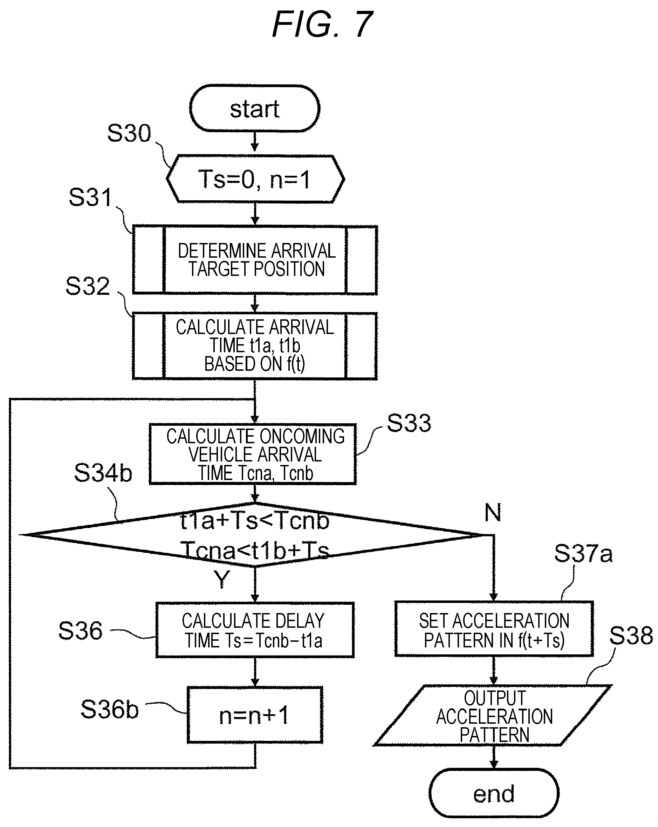

FIG. 7 is a control flowchart of Example 3 according to setting of an acceleration pattern by the acceleration pattern selecting/setting means 8 of the vehicle control apparatus 1 of the embodiment, and shows details of processing S3 shown in FIG. 4. In the processing flow of Example 3, processing S30 and S36b are added to the processing flow in Example 1 shown in FIG. 5, and processing S35 and S37 are unified as processing S37a. The flowchart of Example 3 shown in FIG. 7 shows a case where only a plurality of oncoming vehicles C1, C2, ..., Cn exist in the intersection shown in FIG. 1.

When only oncoming vehicles C1, C2, ..., Cn (oncoming vehicle C3 and subsequent vehicles are not shown) exist in FIG. 1, the acceleration pattern selecting/setting means 8 first sets delay time Ts to 0 in processing S30 shown in FIG. 7, and sets natural number n to 1. Next, as in Example 1, the acceleration pattern selecting/setting means 8 determines an arrival target position of the own vehicle 100 with respect to the intersection position Xc1, Xc2, ..., Xcn based on the expected course Rc1, Rc2, ..., Rcn of the oncoming vehicles C1, C2, ..., Cn which are calculated in processing S31. In subsequent processing S32, the acceleration pattern selecting/setting means 8 calculates arrival time t1a, t2a, ..., tna and passing time t1b, t2b, ..., tnb with respect to the respective intersection position Xc1, Xc2, ..., Xcn. In subsequent processing S33, the acceleration pattern selecting/setting means 8 calculates the arrival time Tcna and passing time Tcnb of n-th oncoming vehicle Cn based on the natural number n which is set in processing S30. Here, since the natural number n is set to 1 in processing S30, the arrival time Tc1a and the passing time Tclb of the first oncoming vehicle C1 are calculated as in Example 1.

In subsequent determination processing S34b, the acceleration pattern selecting/setting means 8 determines whether there is possibility of collision between the own vehicle 100 and the oncoming vehicle Cn as in Example 1. Here, delay time Ts is set to 0 and the natural number n is set to 1 in processing S30. Hence, if t1a < Tclb and Tc1a < t1b are not established, the acceleration pattern selecting/setting means 8 determines that there is no possibility of collision between the own vehicle 100 and the first oncoming vehicle C1 ((N)) as in Example 1, and procedure proceeds to processing S37a. In processing 37a, since delay time Ts is set to 0 in processing S30, the acceleration pattern selecting/setting means 8 selects and sets the acceleration pattern f(t) at the time of normal acceleration start, and outputs the acceleration pattern f(t) to the vehicle driving means 9 in processing S38.

According to this, the own vehicle 100 starts and accelerates in accordance with the acceleration pattern f (t) as in Example 1, and the own vehicle 100 passes the intersection position Xc1 when or before the first oncoming vehicle C1 arrives at the intersection position Xc1. Therefore, according to Example 3, as in Example 1, the own vehicle 100 is started and accelerated with appropriate timing capable of avoiding collision between the own vehicle 100 and a moving body such as the oncoming vehicle C1, and it is possible to change a course safely and swiftly.

On the other hand, if t1a < Tclb and Tc1a < t1b are established in processing S34B and the acceleration pattern selecting/setting means 8 determines that there is possibility of collision between the own vehicle 100 and the first oncoming vehicle C1 (Y), procedure proceeds to processing S36. In processing S36, since the natural number n is set to 1 in processing S30, the acceleration pattern selecting/setting means 8 calculates the delay time Ts which is a difference between the passing time Tclb of the first oncoming vehicle C1 and the arrival time t1a of the own vehicle 100 as in Example 1. In subsequent processing S36b, the acceleration pattern selecting/setting means 8 sets the natural number n to n + 1, i.e., to n = 2, and the procedure returns to processing S33.

In second processing S33, the acceleration pattern selecting/setting means 8 calculates arrival time Tc2a and passing time Tc2b with respect to an intersection position Xc2 of the second oncoming vehicle C2 based on the natural number n = 2 which is set in processing S36b. In second determination processing S34b, the acceleration pattern selecting/setting means 8 determines that there is no possibility of collision between the own vehicle 100 and the second oncoming vehicle C2 (N) when t1a + Ts < Tc2b and Tc2a < t1b + Ts are not established based on the delay time Ts concerning the first oncoming vehicle C1 calculated in processing S36, and procedure proceeds to processing S37a. In second processing 37a, the acceleration pattern selecting/setting means 8 selects and sets acceleration pattern f (t + Ts) which is obtained by delaying the acceleration pattern f(t) at the time of normal acceleration start by the delay time Ts based on the delay time Ts concerning the first oncoming vehicle C1 calculated in processing S36, and outputs the acceleration pattern f(t + Ts) to the vehicle driving means 9 in processing S38.

According to this, the own vehicle 100 starts and accelerates in accordance with the delay acceleration pattern f(t + Ts) based on the delay time Ts concerning the first oncoming vehicle C1, the own vehicle 100 arrives at the intersection position Xc1 when or after the first oncoming vehicle C1 passes the intersection position Xc1, and the own vehicle 100 passes the intersection position Xc2 when or before the second oncoming vehicle C1 arrives at the intersection position Xc2. Therefore, according to Example 3, even if a plurality of oncoming vehicles C1, C2, Cn, ..., Cn run on an oncoming lane, the own vehicle 100 is started and accelerated with appropriate timing capable of avoiding collision between the own vehicle 100 and the oncoming vehicles C1, C2, Cn, ..., Cn and it is possible to change a course safely and swiftly.

In the second determination processing S34b, based on the delay time Ts concerning the first oncoming vehicle C1, if t1a + Ts < Tc2b and Tc2a < t1b + Ts are established and the acceleration pattern selecting/setting means 8 determines that there is possibility of collision between the own vehicle 100 and the second oncoming vehicle C2 (Y), procedure proceeds to second processing S36. In second processing S36, since the natural number n is set to 2 in first processing S36b, the acceleration pattern selecting/setting means 8 calculates second delay time Ts which is a difference between the passing time Tc2b of the second oncoming vehicle C2 and the arrival time t1a of the own vehicle 100. In subsequent second processing S36b, the acceleration pattern selecting/setting means 8 sets the natural number n to n + 1, i.e., n = 3, and procedure returns to processing S33.

In next third processing S33, the acceleration pattern selecting/setting means 8 calculates arrival time Tc3a and passing time Tc3b with respect to an intersection position Xc3 of the third oncoming vehicle C3 (not shown) based on the natural number n = 3 which is set in the second processing S36b. In next third determination processing S34b, based on second delay time Ts concerning the second oncoming vehicle C2 calculated in the second processing S36, if t1a + Ts < Tc3b and Tc3a < t1b + Ts are not established, the acceleration pattern selecting/setting means 8 determines that there is no possibility of collision between the own vehicle 100 and the third oncoming vehicle C3 (N), and procedure proceeds to processing S37a. Even if the third vehicle C3 does not exist, the procedure likewise proceeds to processing S37a. In processing S37a, based on second delay time Ts concerning the second oncoming vehicle C2 calculated in second processing S36, the acceleration pattern selecting/setting means 8 selects and sets the acceleration pattern f (t + Ts) which is obtained by delaying the acceleration pattern f(t) at the time of normal acceleration start by the second delay time Ts, and the acceleration pattern selecting/setting means 8 outputs the acceleration pattern f (t + Ts) to the vehicle driving means 9 in processing S38.

According to this, the own vehicle 100 starts and accelerates in accordance with delay acceleration pattern f (t + Ts) based on the second delay time Ts concerning the second oncoming vehicle C2, the own vehicle 100 arrives at the intersection position Xc2 when or after the second oncoming vehicle C2 passes the intersection position Xc2, and the own vehicle 100 passes the intersection position Xc2 when or before the third oncoming vehicle C3 arrives at the intersection position Xc3. When the third and subsequent oncoming vehicles C3, ..., Cn do not exists, the own vehicle 100 arrives at the intersection position Xc2 when or after the second oncoming vehicle C2 passes the intersection position Xc2. Therefore, according to Example 3, even if a plurality of oncoming vehicles C1, C2, ..., Cn run on an oncoming lane, the own vehicle 100 is started and accelerated with appropriate timing capable of avoiding collision between the own vehicle 100 and the oncoming vehicles C1, C2, ..., Cn and it is possible to change a course safely and swiftly.

### (Example 4)

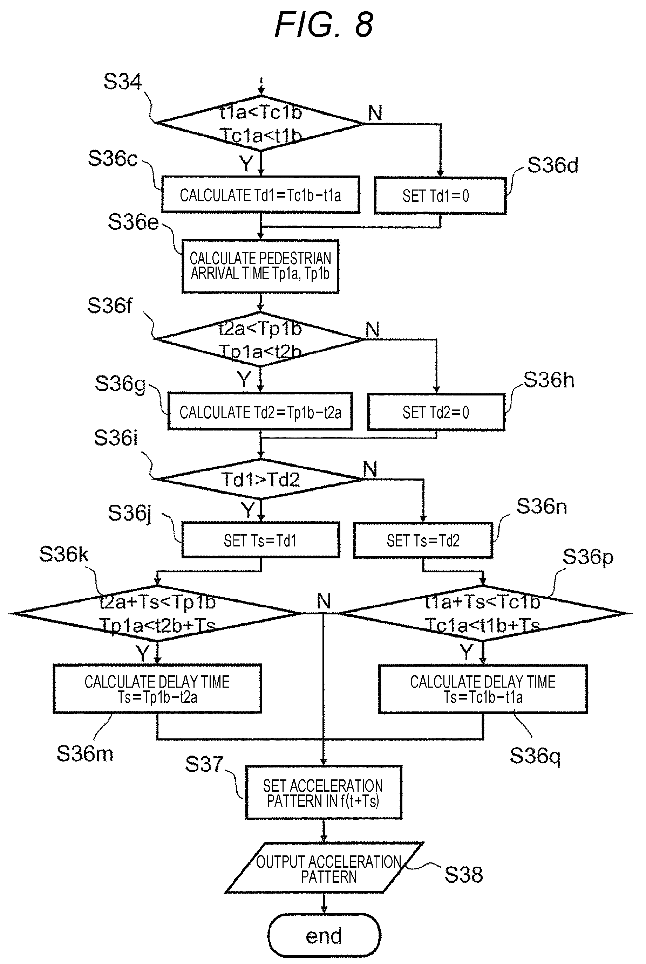

FIG. 8 is a control flowchart of Example 4 according to setting of an acceleration pattern by the acceleration pattern selecting/setting means 8 of the vehicle control apparatus 1 of the embodiment, and shows details of processing S3 shown in FIG. 4. Since start to processing S34 of the processing flow of Example 4 shown in FIG. 8 are the same as the start to processing S34 of the processing flow of Example 1 shown in FIG. 5, they are not illustrated in the drawing. In the processing flow of Example 4, processing S35 and S36 of the processing flow of Example 1 shown in FIG. 5 after processing S34 are replaced by processing S36c to S36q. The flowchart of Example 4 shows a case where in the intersection shown in FIG. 1, only one oncoming vehicle C1 and one pedestrian P1 exist.

When only one oncoming vehicle C1 and one pedestrian P1 exist in FIG. 1 in processing S31 shown in FIG. 5, the acceleration pattern selecting/setting means 8 determines, in an arrival target position of the own vehicle 100, an arrival position where the own vehicle 100 arrives at the intersection position Xc1 shown in FIG. 1 and a passing position where the own vehicle 100 passes the intersection position Xc1. Similarly, in processing S31, the acceleration pattern selecting/setting means 8 determines, in an arrival target position of the own vehicle 100, an arrival position where the own vehicle 100 arrives at the intersection position Xp1 and a passing position where the own vehicle 100 passes the intersection position Xp1.

In subsequent processing S32, based on the acceleration pattern f(t) at the time of normal acceleration start produced by the acceleration pattern producing means 7, the acceleration pattern selecting/setting means 8 calculates arrival time t1a required until the own vehicle 100 arrives at the intersection position Xc1 and the passing time t1b required until the own vehicle 100 passes the intersection position Xc1. Similarly, in processing S32, the acceleration pattern selecting/setting means 8 calculates arrival time t2a required until the own vehicle 100 arrives at the intersection position Xp1 and passing time t2b required until the own vehicle 100 passes the intersection position Xp1.

In Example 4, while taking safety of pedestrian P1 into account as described above, the arrival time t2a may be calculated based on a running distance through which the own vehicle 100 arrives at the pedestrian crosswalk Z instead of based on a running distance through which the own vehicle 100 arrives at the intersection position Xp1. Further, the passing time t2b may also be calculated based on a running distance through which the own vehicle 100 passes the pedestrian crosswalk Z instead of based on a running distance through which the own vehicle 100 passes the intersection position Xp1.

In subsequent processing S33, as in Example 1, the acceleration pattern selecting/setting means 8 calculates arrival time Tc1a required until the oncoming vehicle C1 arrives at the intersection position Xc1 and passing time Tclb required until the oncoming vehicle C1 passes the intersection position Xc1. In processing S33, the acceleration pattern selecting/setting means 8 calculates the arrival time Tpla required until the pedestrian P1 arrives at the intersection position Xp1 and passing time Tplb required until the pedestrian P1 passes the intersection position Xp1.

In subsequent determination processing S34, t1a < Tclb and Tc1a < t1b are established, the acceleration pattern selecting/setting means 8 determines that there is possibility of collision between the own vehicle 100 and the oncoming vehicle C1 (Y) as in Example 1, procedure proceeds to processing S36c shown in FIG. 8. In processing S36c, as in processing S36 of Example 1, the acceleration pattern selecting/setting means 8 calculates a time difference Td1 between the passing time Tclb of the oncoming vehicle C1 and the arrival time t1a of the own vehicle 100.

When t1a < Tclb and Tc1a < t1b are not established in determination processing S34 on the other hand, the acceleration pattern selecting/setting means 8 determines that there is no possibility of collision between the own vehicle 100 and the oncoming vehicle C1 (N), and procedure proceeds to processing S36d shown in FIG. 8. In processing S36s, the acceleration pattern selecting/setting means 8 sets the time difference Td1 to 0.

In subsequent processing S36e, the acceleration pattern selecting/setting means 8 calculates arrival time Tpla (= Lp1a/Vp1) and passing time Tplb (= Lp1b/Vp1) of the pedestrian P1 as described above.

In subsequent determination processing S36f, the acceleration pattern selecting/setting means 8 determines whether the own vehicle 100 and the pedestrian P1 pass the intersection position Xp1 at the same time, i.e., whether there is possibility of collision between the own vehicle 100 and pedestrian P1. Specifically, when the arrival time t1a when the own vehicle 100 arrives at the intersection position Xp1 or the pedestrian crosswalk Z is faster than the passing time Tclb when the pedestrian P1 passes the intersection position Xc1 (t1a < Tp1b), and when the passing time t1b when the own vehicle 100 passes the intersection position Xp1 or the pedestrian crosswalk Z is slower than the time Tpla when the pedestrian P1 arrives at the intersection position Xp1 (Tpla < t1b), the acceleration pattern selecting/setting means 8 determines that there is possibility of collision between the own vehicle 100 and the pedestrian P1 (Y), and procedure proceeds to processing S36g. In processing S36g, the acceleration pattern selecting/setting means 8 calculates a time difference Td2 which is a difference between the passing time Tplb of the pedestrian P1 and the arrival time t2a of the own vehicle 100.

If t1a < Tplb and Tpla < t1b are not established in determination processing S36f on the other hand, the acceleration pattern selecting/setting means 8 determines that there is no possibility of collision between the own vehicle 100 and the pedestrian P1 (N), and procedure proceeds to processing 36h. In processing 36h, the acceleration pattern selecting/setting means 8 sets the time difference Td2 to 0.

In subsequent determination processing S36i, if Td1 > Td2 is established (Y), the acceleration pattern selecting/setting means 8 sets delay time Ts to Td1 in subsequent processing S36j.

In processing S34, when it is determined that there is danger of collision between the own vehicle 100 and the oncoming vehicle C1 (Y) and it is determined that there is danger of collision between the own vehicle 100 and the pedestrian P1 (Y) in the processing S36f, if delay time Ts is set to Td1 in processing S36j, Ts becomes equal to Tclb-tla. Hence, the own vehicle 100 passes intersection positions Xc1 and Xp1 after the oncoming vehicle C1 and the pedestrian P1 pass the intersection positions Xc1 and Xp1. In this case, in subsequent processing S36k, if t2a + Ts < Tplb and Tpla < t2b + Ts are not established, the acceleration pattern selecting/setting means 8 determines that there is no danger of collision between the pedestrian P1 and the own vehicle 100 (N), procedure proceeds to processing S37.

When it is determined that there is danger of collision between the own vehicle 100 and the oncoming vehicle C1 (Y) in processing S34 and when it is determined that there is no danger of collision between the own vehicle 100 and the pedestrian P1 in processing S36f (N), if the delay time Ts is set to Td1 in processing S36j, the own vehicle 100 passes the intersection position Xc1 after the oncoming vehicle C1 passes the intersection position Xc1, but at this time, since the pedestrian P1 tries to pass in front of the own vehicle 100 in the travelling direction, there is danger of collision with respect to the pedestrian P1.

Hence, in subsequent processing S36k, if the acceleration pattern selecting/setting means 8 determines that there is danger of collision with respect to the pedestrian P1, i.e., if it is determined that t2a + Ts < Tplb and Tpla < t2b + Ts are established (Y), delay time Ts = Tplb-t2a is calculated in subsequent processing S36m. According to this, the delay time Ts is set such that the own vehicle 100 arrives at the intersection position Xp1 or the pedestrian crosswalk Z after the pedestrian P1 passes the intersection position Xp1. If the acceleration pattern selecting/setting means 8 determines that there is no danger of collision between the own vehicle 100 with respect to the pedestrian P1, i.e., if the acceleration pattern selecting/setting means 8 determines that t2a + Ts < Tplb and Tpla < t2b + Ts are not established (N), procedure proceeds to processing S37 while keeping delay time Ts = Td1 so that the own vehicle 100 passes the intersection positions Xc1 and Xp1 after the oncoming vehicle C1 passes the intersection position Xc1 and before the pedestrian P1 arrives at the intersection position Xp1 in processing S36k.

When Td1 > Td2 is not established in determination processing S36i on the other hand (N), the acceleration pattern selecting/setting means 8 sets delay time Ts to Td2 in subsequent processing S36n.

Here, when it is determined that there is no danger of collision between the own vehicle 100 and the oncoming vehicle C1 in processing S34 (N) and when it is determined that there is no danger of collision between the own vehicle 100 and the pedestrian P1 (N) in processing S36j, if delay time Ts is set to Td2 in processing S36j, Ts becomes 0. Hence, the own vehicle 100 passes the intersection positions Xc1 and Xp1 before the oncoming vehicle C1 and the pedestrian P1 arrives at the intersection positions Xc1 and Xp1. In this case, the acceleration pattern selecting/setting means 8 determines that there is no danger of collision between the own vehicle 100 between the oncoming vehicle C1 and the own vehicle 100 in subsequent processing S36p, i.e., the acceleration pattern selecting/setting means 8 determines that t1a + Ts < Tclb and Tc1a < t1b + Ts are not established (N), and procedure proceeds to processing S37.

When it is determined that there is no danger of collision between the own vehicle 100 and the oncoming vehicle C1 in processing S34 (N) and it is determined that there is danger of collision between the own vehicle 100 and the pedestrian P1 in processing S36f (Y), if delay time Ts is set to Td2 in processing S36n, the own vehicle 100 passes the intersection position Xp1 after the pedestrian P1 passes the intersection position Xp1, but at this time, since the pedestrian P1 tries to pass in front of the oncoming vehicle C1 in the travelling direction, there is danger of collision between the own vehicle 100 with respect to the oncoming vehicle C1.

Hence, in subsequent processing S36p, if the acceleration pattern selecting/setting means 8 determines that there is danger of collision with respect to the oncoming vehicle C1, i.e., t1a + Ts < Tclb and Tc1a < t1b + Ts are established (Y), the acceleration pattern selecting/setting means 8 calculates delay time Ts = Tc1b-t1a in subsequent processing S36q. According to this, the delay time Ts is set so that the own vehicle 100 passes the intersection position Xc1 after the oncoming vehicle C1 passes the intersection position Xc1. If the acceleration pattern selecting/setting means 8 determines that there is no danger of collision with respect to the oncoming vehicle C1 i.e., t1a + Ts < Tclb and Tc1a < t1b + Ts are not established (N) in processing S36p, procedure proceeds to processing S37 while keeping delay time Ts = Td2 so that the own vehicle 100 passes the intersection positions Xc1 and Xp1 after the pedestrian P1 passes the intersection position Xp1 and before the oncoming vehicle C1 arrives at the intersection position Xc1.

In subsequent processing S37, as in Example 1, the acceleration pattern selecting/setting means 8 selects and sets the delay acceleration pattern f(t + Ts) which is obtained by delaying the acceleration pattern f(t) by delay time Ts at the time of normal acceleration start produced by the acceleration pattern producing means 7. In subsequent processing S38, the acceleration pattern selecting/setting means 8 outputs the selected and set acceleration pattern f(t + Ts) to the vehicle driving means 9.

According to this, in processing S4 shown in FIG. 4, if there is determination of permitting operation by the start-permitting means 5 (Y), the vehicle driving means 9 carries out the start/acceleration control of the own vehicle 100 in processing S5, and the own vehicle 100 is started and accelerated. At this time, the start and acceleration of the own vehicle 100 by the vehicle driving means 9 are carried out in accordance with the set acceleration pattern f(t + Ts).

Therefore, according to Example 4, when the own vehicle 100 changes a course involving start and acceleration such as turning to the right at an intersection, the vehicle control apparatus 1 can start and accelerate the own vehicle 100 with any one of the following first to fourth timing while avoiding collision with respect to the oncoming vehicle C1 and the pedestrian P1. First timing is set such that the own vehicle 100 passes intersection positions Xc1 and Xp1 after the oncoming vehicle C1 and the pedestrian P1 pass the intersection positions Xc1 and Xp1. Second timing is set such that the own vehicle 100 passes the intersection positions Xc1 and Xp1 after the oncoming vehicle C1 passes the intersection position Xc1 and before the pedestrian P1 arrives at the intersection position Xp1. Third timing is set such that the own vehicle 100 passes the intersection positions Xc1 and Xp1 before the oncoming vehicle C1 arrives at the intersection position Xc1 and after the pedestrian P1 passes the intersection position Xp1. Fourth timing is set such that the own vehicle 100 passes the intersection positions Xc1 and Xp1 before the oncoming vehicle C1 and the pedestrian P1 arrive at the intersection positions Xc1 and Xp1. According to this, the own vehicle 100 can change a course safely and swiftly.

As described above in Examples 1 to 4, according to the vehicle control apparatus 1 of this embodiment, based on the expected course r of the own vehicle 100, the expected course Rc1, Rc2, ..., Rcn and Rp1, Rp2, ... , Rpn of the oncoming vehicle C1, C2, ..., Cn and pedestrian P1, P2, ..., Pn which are moving bodies, and moving speed Vc1, Vc2, ..., Vcn and Vp1, Vp2, ..., Vpn, the acceleration pattern selecting/setting means 8 selects and sets an acceleration pattern from the plurality of acceleration pattern f(t), F(t), f(t + Ts) and F(t + Ts) under which the own vehicle 100 and the moving bodies do not pass the intersection positions Xc1, Xc2, ..., Xcn and Xp1, Xp2, ..., Xpn at the same time. Based on the selected and set acceleration pattern, the vehicle driving means 9 automatically starts and accelerates the own vehicle 100. Therefore, according to the vehicle control apparatus 1 of this embodiment, when the own vehicle 100 starts involving course-change such as turning to the right, it is possible to start the own vehicle 100 with appropriately timing, to avoid collision between the own vehicle 100 and the oncoming vehicles C1, C2, ..., Cn and pedestrians P1, P2, ..., Pn which are moving bodies, and to safely and swiftly change a course.

Further, when the acceleration pattern selecting/setting means 8 selects and sets an acceleration pattern, the acceleration pattern selecting/setting means 8 calculates arrival time Tc1a, Tc2a, ..., Tcna and Tpla, Tp2a, ..., Tpna, and passing time Tclb, Tc2b, ..., Tcnb and Tplb, Tp2b, ..., Tpnb of the moving bodies. Therefore, it is possible to select and set an appropriate acceleration pattern using these information as a standard.

Further, when the acceleration pattern selecting/setting means 8 selects and sets an acceleration pattern, the acceleration pattern selecting/setting means 8 calculates arrival time t1a, t2a, ..., tna and passing time t1b, t2b, ..., tnb concerning the own vehicle 100. Therefore, by comparing arrival time Tc1a, Tc2a, ..., Tcna and Tpla, Tp2a, ..., Tpna of the moving bodies or passing time Tclb, Tc2b, ... , Tcnb and Tplb, Tp2b, ... , Tpnb of the moving bodies with each other, it is possible to select and set an appropriate acceleration pattern.

The vehicle control apparatus 1 includes the stop-determining means 3 which determines whether the vehicle 100 is under suspension based on own vehicle speed which is input from the speed detector 101 of the vehicle 100 and/or image information of the stereo camera 102. Hence, it is possible to carry out the start/acceleration control while limiting to stopping time or slowly driving time of the own vehicle 100 which requires the start/acceleration control of the own vehicle 100.

Further, the vehicle control apparatus 1 includes the course-change determining means 4 as permitting means which detects operation of the winker 103 based on a signal when a driver of the own vehicle 100 operates the winker 103, and which determines whether the start/acceleration control is permitted based on the operation. Hence, it is possible to carry out the start/acceleration control while limiting to a case where course-change such as turning to the right is necessary.

Similarly, the vehicle control apparatus 1 includes the start-permitting means 5 as permitting means which detects operation of the accelerator pedal 104 based on a signal when the driver of the own vehicle 100 operates the accelerator pedal 104, and determines whether the start/acceleration control is permitted based on the operation. Hence, it is possible to carry out the start/acceleration control after checking a driver's will to start, and it is possible to prevent the start/acceleration control from being carried out against the driver's will.

The externality recognizing means 2 acquires a position of the oncoming vehicle C1 based on an image of the stereo camera 102 provided in the own vehicle 100, and calculates a moving direction and moving speed of the oncoming vehicle C1 based on time-variation of the position of the oncoming vehicle C1. Hence, it is possible to obtain more precise information. The externality recognizing means 2 recognizes a road shape in front of the own vehicle 100 in the travelling direction based on the image of the stereo camera 102. Therefore, it is possible to more precisely and easily obtain a road shape.

If the vehicle control apparatus is designed such that a driver can select whether the strong acceleration pattern F(t) and the delay strong acceleration pattern F (t + Ts) can be used, it is possible to prevent the own vehicle 100 from accelerating against a driver's will, and it is possible to reduce a feeling of strangeness of the driver. Further, if the vehicle control apparatus is designed such that a driver can set sizes of waveforms of the acceleration patterns f(t), f(t + Ts), F(t) and F (t + Ts), the own vehicle 100 can start and accelerate in accordance with experience and technique of the driver, and it is possible to reduce a feeling of strangeness of the driver.

### (Modification 1)

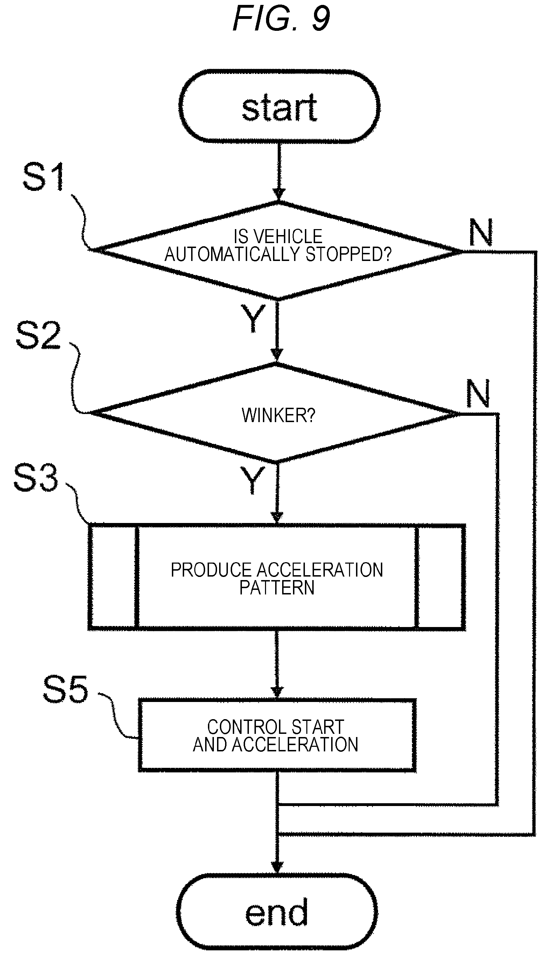

Next, a modification 1 of the above-described embodiment will be described. FIG. 9 is a flowchart of start/acceleration control of the modification 1 corresponding to FIG. 4 of the above-described embodiment. As shown in FIG. 9, the flowchart of the modification does not have processing S4 shown in FIG. 4. That is, it is possible to execute the start/acceleration control of processing S5 by determining whether there is permitting operation by the winker 103 of processing S2 without determining whether there is permitting operation by the accelerator pedal 104. In this modification also, the same effects as those of the first embodiment can be obtained.

### [Second Embodiment]

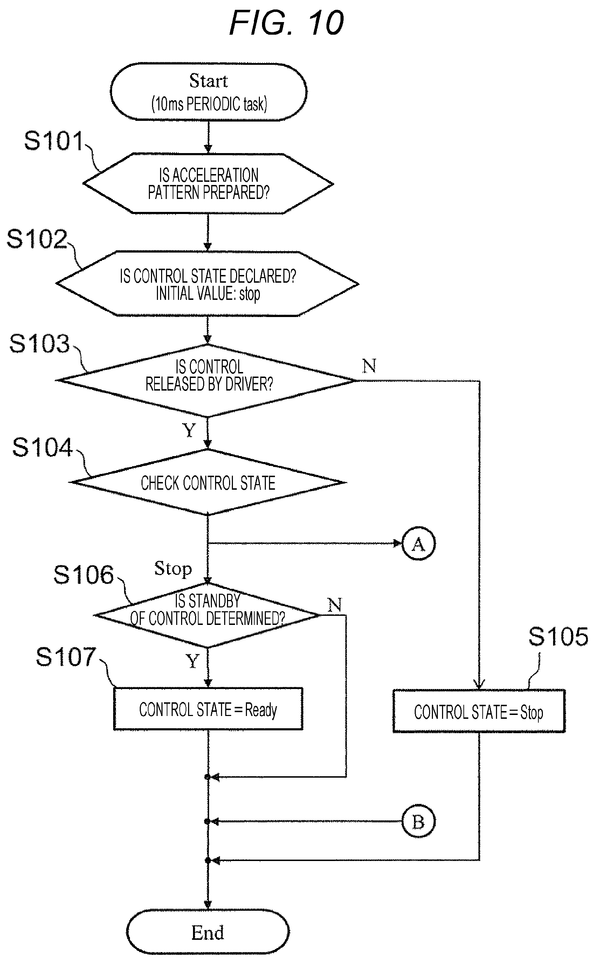

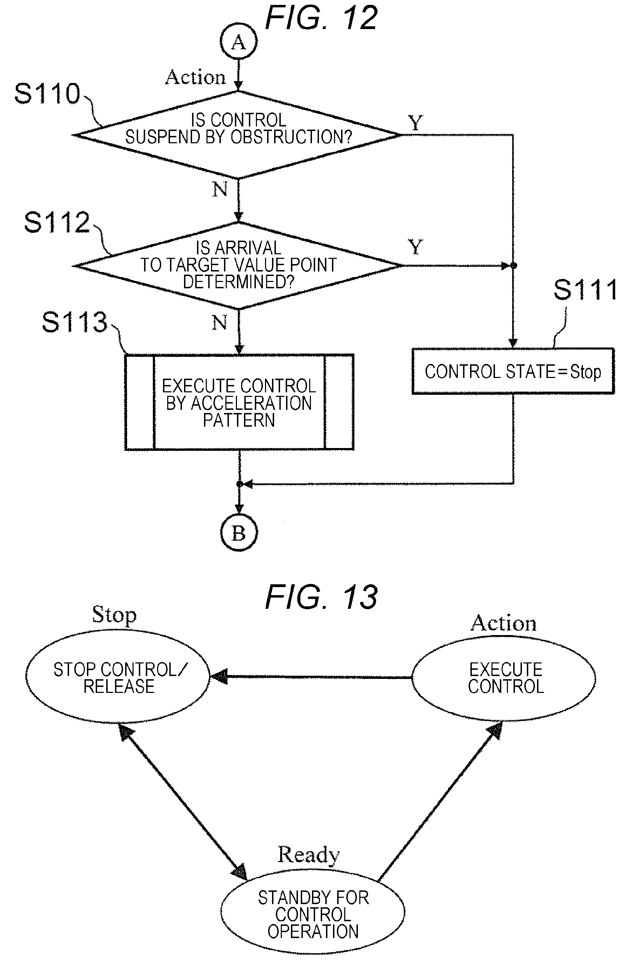

Next, a second embodiment of the present invention will be described using FIGS. 10 to 13 also while making a reference to FIGS. 1 to 9. FIGS. 10 to 12 are flowcharts showing start/acceleration control of a vehicle by a vehicle control apparatus of the second embodiment. FIG. 13 is a conceptual diagram showing transition of a control state of the vehicle control apparatus.

The vehicle control apparatus of the second embodiment is different from the vehicle control apparatus 1 of the first embodiment in the following points. Firstly, acceleration pattern producing means 7 includes at least one preset acceleration pattern. Secondly, instead of the acceleration pattern selecting/setting means 8, the vehicle control apparatus includes determining means that determines danger of collision of the own vehicle 100 based on acceleration patterns possessed by the acceleration pattern producing means 7. Thirdly, the vehicle driving means 9 starts and accelerates own vehicle 100 based on determination made by determining means and an acceleration pattern possessed by acceleration pattern producing means 7. Since other points are the same as the vehicle control apparatus 1 of the first embodiment, the same reference signs are allocated to the same configurations, and description thereof will be omitted.

The start/acceleration control of the own vehicle 100 by the vehicle control apparatus of the embodiment will be described below. According to the vehicle control apparatus of the embodiment, if an actuation switch of the own vehicle 100 is turned ON, control flow which is repeated with a period of 10 msec shown in FIG. 10 is started. The acceleration pattern producing means 7 of the embodiment includes at least one preset and stored acceleration pattern, e.g., an acceleration pattern f(t) shown in FIG. 3 for example. The acceleration pattern producing means 7 of the embodiment outputs the acceleration pattern f (t) to the determining means.

After the control flow shown in FIG. 10 is started, the acceleration pattern producing means 7 prepares a state where the acceleration pattern f(t) can be output in processing S101, and declares that a control state is Stop which is an initial value in processing S102. In processing S103, the determining means determines whether control is released by a driver based on information from externality recognizing means 2, stop-determining means 3, course-change determining means 4 and start-permitting means 5, or other operation information of the own vehicle 100.

Specifically, the determining means can determine whether control is released by the driver based on the following information for example. That is, such information sets include depressing operation of a brake pedal, OFF operation of a winker 103, operation of a parking brake, changing operation of a gear position to positions other than D, 1, 2, L or B, steering operation in a direction opposite from a direction in which course-change is scheduled, releasing operation of a seatbelt, information concerning opening of a door, control releasing operation by control releasing switch, and trouble detection information of related devices.

Based on the above-described information of the own vehicle 100, if the determining means determines that control is released by the driver in processing 103 (Y), procedure proceeds to processing S104, and a current control state of the vehicle control apparatus is checked. When the current control state of the vehicle control apparatus is Stop as described above, procedure proceeds to processing 106. If the determining means determines that the control is not released by the driver in processing 103 (N), procedure proceeds to processing S105, the control state of the vehicle control apparatus is brought into Stop, and the control flow is completed (End). According to this, the vehicle control apparatus again returns to Start of the control flow.

In processing 106, the determining means determines whether the control is waited by the driver like processing S1, S2 and S4 shown in FIG. 4 of the first embodiment. Specifically, like processing S1, S2 and S4 shown in FIG. 4 for example, if the determining means determines that the own vehicle stops (Y), determines that there is a driver's permitting operation by the winker 103 (Y), and determines that there is driver's permitting operation by the accelerator pedal 104 (Y), the determining means determines that control is waited (Y), and procedure proceeds to processing S107. At this time, the presence or absence of driver's operation of a dedicated switch may be used as determination reference.

Further, if the determining means determines that control is not waited in processing 106 (N), the control state of the vehicle control apparatus is maintained at Stop, the control flow is completed (End), and the determining means again returns to Start of the control flow. In the embodiment, the processing for selecting and setting one of the plurality of acceleration patterns in processing S3 shown in FIG. 4 is not carried out, and the acceleration pattern f(t) previously possessed by the acceleration pattern producing means 7 is set as an acceleration pattern which is executed by the determining means.

In processing S107, the determining means changes the control state of the vehicle control apparatus to Ready. According to this, as shown in FIG. 13, the control state of the vehicle control apparatus is shifted from Stop which is a control-stopped state or a control-released state to Ready which is a control operation-standby state. Here, Stop is a state where the control operation of the own vehicle 100 is stopped or released, and Ready is a state where the control operation of the own vehicle 100 is waited. Thereafter, the determining means completes the control flow (End), and again returns to Start of the control flow.

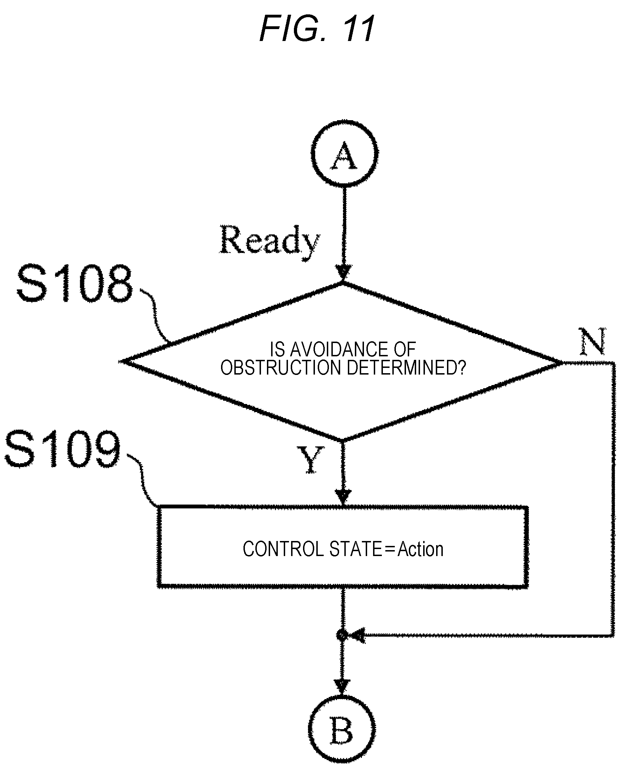

If the determining means returns to Start of the control flow through processing S107, it is checked that the control state of the vehicle control apparatus is Ready in processing S104 through processing S101, S102 and S103, and procedure proceeds to processing S108 shown in FIG. 11. In processing S108, like the above-described first embodiment, obstruction avoiding determination is executed by the determining means. Specifically, the determining means determines an arrival target position of the own vehicle 100, and based on the acceleration pattern f(t) previously possessed by the acceleration pattern producing means, the determining means calculates arrival time t1a and t2a required until the own vehicle 100 arrives at intersection positions Xc1 and Xp1 shown in FIG. 1, and passing time t1b and t2b required until the own vehicle 100 passes the intersection positions Xc1 and Xp1. Further, the determining means calculates the arrival time Tc1a and Tpla required until an oncoming vehicle C1 and a pedestrian P1 arrives at the intersection positions Xc1 and Xp1, and passing time Tclb and Tplb required until the oncoming vehicle C1 and the pedestrian P1 pass the intersection positions Xc1 and Xp1.

Based on a comparison result of the calculated time as in the first embodiment, if there is no possibility of collision between the own vehicle 100 and the oncoming vehicle C1 and the pedestrian P1, the determining means determines that an obstruction can be avoided in processing S108 (Y), and procedure proceeds to processing S109. In processing S109, the determining means changes the control state of the vehicle control apparatus to Action, the determining means proceeds to completion (end) of the control flow shown in FIG. 10, and the determining means again returns to Start of the control flow. According to this, the control state of the vehicle control apparatus is shifted from Ready which is the control operation standby state to Action which is a state where control of the own vehicle 100 can be executed as shown in FIG. 13.

Based on the comparison result of the time, if there is possibility of collision between the own vehicle 100 and the oncoming vehicle C1 and the pedestrian P1, the determining means determines that the obstruction cannot be avoided (N) in processing S108, the control state of the vehicle control apparatus is maintained at Ready, the procedure proceeds to completion (end) of the control flow shown in FIG. 10, and the determining means again returns to Start of the control flow.

In processing S109, the control state of the vehicle control apparatus is brought into Action, the determining means returns to Start of the control flow, and if it is checked that the control state of the vehicle control apparatus is Action in processing S104 through processing S101, S102, S103, procedure proceeds to processing S110 shown in FIG. 12. In processing S110, control discontinuance which is attributable to an obstruction is determined by the determining means. Specifically, in the example shown in in FIG. 1, if an oncoming vehicle C1 abruptly accelerates or abruptly decelerates or a pedestrian P1 suddenly starts running, calculated values of the arrival time Tc1a and Tpla required until they arrives at the intersection positions Xc1 and Xp1 are varied in some cases. According to this, when possibility of collision between the own vehicle 100 and the oncoming vehicle C1 and the pedestrian P1 occurs, the determining means determines that control is discontinued by the obstruction in processing S110 (Y), and procedure proceeds to processing S111.

In processing S111, the determining means changes the control state of the vehicle control apparatus to Stop, the procedure proceeds to completion (end) of the control flow shown in FIG. 10, and the determining means again returns to Start of the control flow. According to this, as shown in FIG. 13, the control state of the vehicle control apparatus is shifted from Action in which control can be executed to Stop which is control-stopped/released state.

If possibility of collision between the own vehicle 100 and the oncoming vehicle C1 and the pedestrian P1 does not occur in processing S110, the determining means determines that there is no control discontinuance by an obstruction in processing S110 (N), procedure proceeds to processing S112. In processing S112, the determining means carries out arrival determination to a target value point of the own vehicle 100. Specifically, the determining means continues control of the own vehicle 100 based on the acceleration pattern f(t) possessed by the acceleration pattern producing means. As a result, by determining arrival at Xo1 spot shown in FIG. 1, i.e., by determining passage of time t2b - t2B from the start of control by start of the acceleration pattern f(t), if the determining means determines that arrival is uncompleted to the target value point (N), procedure proceeds to processing S113. In processing S113, the determining means outputs the acceleration pattern f (t) to the vehicle driving means 9, the vehicle driving means 9 controls acceleration of the own vehicle 100 based on the acceleration pattern f(t) as described above, and makes the own vehicle 100 run. Thereafter, the procedure proceeds to completion (end) of the control flow shown in FIG. 10, and again returns to Start of the control flow. If the determining means determines that arrival of the own vehicle 100 to the target value point is completed (Y) in processing S112, procedure proceeds to processing S111.

As described above, according to the vehicle control apparatus of the embodiment, when the own vehicle 100 starts involving course-change, the vehicle driving means 9 automatically starts and accelerates the own vehicle 100 with timing capable of avoiding possibility of collision with respect to a moving body based on the preset acceleration pattern f(t), and it is possible to change a course safely and swiftly. Since it is possible to start and accelerate the own vehicle 100 based on the preset acceleration pattern f(t), a feeling of strangeness is not given to a driver.

The transition of the control state of the vehicle control apparatus shown in FIG. 13 is executed in the following priority order based on the control flow shown in FIGS. 10 to 12. First priority is transition (processing S105) from Ready to Stop and transition (processing S105) from Action to Stop based on the control releasing determination of a driver in processing S103. Second priority is transition (processing S107) from Stop to Ready based on control standby determination of processing S106. Third priority is transition (processing S109) from Ready to Action based on obstruction avoiding determination of processing S108. Fourth and fifth priority is transition (processing S111) from Action to Stop based on control discontinuance by obstruction of processing S110 and arrival determination to the target value point of processing S112. According to the priority order, high safety is secured when the own vehicle 100 starts involving course-change.

The arrival determination to the target value point of the own vehicle 100 carried out by the determining means in processing S112 may be carried out in the same manner as the first embodiment. Specifically, based on the acceleration pattern f(t) possessed by the acceleration pattern producing means, the determining means determines whether it is possible for the own vehicle 100 to arrive at the target value point with any one of the following first to fourth timing capable of avoiding collision with respect to the oncoming vehicle C1 and the pedestrian P1 as in the above-described first embodiment.

That is, the first timing is that the own vehicle 100 passes the intersection positions Xc1 and Xp1 after the oncoming vehicle C1 and the pedestrian P1 pass the intersection positions Xc1 and Xp1. The second timing is that the own vehicle 100 passes the intersection positions Xc1 and Xp1 after the oncoming vehicle C1 passes the intersection position Xc1 and before the pedestrian P1 arrives at the intersection position Xp1. Third timing is that the own vehicle 100 passes the intersection positions Xc1 and Xp1 before the oncoming vehicle C1 arrives at the intersection position Xc1 and after the pedestrian P1 passes the intersection position Xp1. Fourth timing is that the own vehicle 100 passes the intersection positions Xc1 and Xp1 before the oncoming vehicle C1 and the pedestrian P1 arrives at the intersection positions Xc1 and Xp1.

If the determining means determines that the own vehicle 100 can arrive at the target value point with the above timing in processing S112 (Y), procedure proceeds to processing S113. The determining means outputs the acceleration pattern f(t) to the vehicle driving means 9 in processing S113, and the vehicle driving means 9 carries out the start/acceleration control of the own vehicle 100 based on the acceleration pattern f (t) as described above, and the vehicle driving means 9 starts and accelerates the own vehicle 100. Thereafter, the procedure proceeds to completion (end) of the control flow shown in FIG. 10, and the procedure again returns to Start of the control flow. On the other hand, if the determining means determines that the own vehicle 100 cannot arrive at the target value point with the above timing in processing S112 (N), procedure proceeds to processing S111. According to the above operation, it is possible to obtain the same effects as the first embodiment.

The embodiments of the present invention are described above, but the invention is not limited to the embodiments, and various other modifications are included. The above embodiments are described to explain the invention in an understandable way, and the invention need not always include all of the described configurations.

For example, as the example of start involving course-change of the own vehicle, a case where the vehicle turns to the right at an intersection of a road of left-hand traffic in the embodiments, but the vehicle control apparatus of the invention can be applied to a case other than this. That is, the vehicle control apparatus of the present invention can be applied to a case where a vehicle turns to the left of a road of right-hand traffic, a case where a vehicle enters a parking lot of a facility existing along a road from a road on which the vehicle is running, and a case where a vehicle changes a course at an intersection other than a junction of three streets or a cross road or a vehicle changes a course in a rotary such that the vehicle temporality stops and gets across a street, a pathway or a pedestrian crosswalk.

The externality recognizing means is not limited to the configuration having the stereo camera. For example, the externality recognizing means may include a monocular camera, a laser radar, a millimeter wave radar or the like.

For example, a main calculating section may carry out processing which is carried out by the externality recognizing means in the above-described embodiments, i.e., the main calculating section may determine whether a moving body is a vehicle or a pedestrian, and may calculate a distance between the own vehicle and a moving body, and a relative position of the moving body with respect to the own vehicle based on an image of a stereo camera used by the externality recognizing means.

The externality recognizing means may shoot (take a picture of) peripheries of the own vehicle over 360° by the stereo camera. Further, the externality recognizing means may include a monocular camera, a laser radar, a millimeter wave radar or the like instead of or in addition to the stereo camera.

### Reference Signs List

1 vehicle control apparatus
2 externality recognizing means
3 stop-determining means
4 course-change determining means (permitting means)
5 start-permitting means (permitting means)
6 estimating means
7 acceleration pattern producing means
8 acceleration pattern selecting/setting means
9 vehicle driving means
100 own vehicle
102 stereo camera
C1, C2 vehicle (moving body)
f(t), f(t + Ts) acceleration pattern
F(t), F(t + Ts) strong acceleration pattern
PI pedestrian (moving body)
Rc1, Rc2, Rp1 expected course
t1a, t2a, Tc1a, Tpla arrival time
t1b, t2b, Tclb, Tplb passing time
t1A, t2A shortened arrival time
t1B, t2B shortened passing time
Ts delay time
Xc1, Xc2, Xp1 intersection position

## Claims

1. A vehicle control apparatus for controlling start and acceleration involving course-change of own vehicle, comprising:
an externality recognizing means that recognizes a moving body and a road shape around the own vehicle, and that calculates a position, a moving direction and moving speed of the moving body,
estimating means that specifies an intersection position between an expected course of the own vehicle and an expected course of the moving body by estimating a course of the own vehicle based on the road shape, and by estimating a course of the moving body based on the position and the moving direction of the moving body, and
vehicle driving means that starts and accelerates the own vehicle based on an acceleration pattern as an acceleration waveform when the own vehicle starts.

2. The vehicle control apparatus according to claim 1, further comprising:
acceleration pattern producing means that produces a plurality of acceleration patterns as acceleration waveforms when the own vehicle starts,
acceleration pattern selecting/setting means that selects and sets one of the plurality of acceleration patterns in which the own vehicle and the moving body do not pass the intersection position at the same time based on the expected course of the own vehicle and the expected course and the moving speed of the moving body, and
vehicle driving means that starts and accelerates the own vehicle based on the selected and set acceleration pattern.

3. The vehicle control apparatus according to claim 2, wherein when the acceleration pattern is selected and set, the acceleration pattern selecting/setting means calculates arrival time required until the moving body arrives at the intersection position, and passing time required until the moving body passes the intersection position based on the expected course and the moving speed of the moving body.

4. The vehicle control apparatus according to claim 3, wherein when the acceleration pattern is selected and set, the acceleration pattern selecting/setting means calculates arrival time required until the own vehicle arrives at the intersection position, and passing time required until the own vehicle passes the intersection position based on the expected course of the own vehicle and one acceleration pattern selected from the plurality of acceleration patterns.

5. The vehicle control apparatus according to claim 4, wherein when the acceleration pattern is selected and set, the acceleration pattern selecting/setting means selects and sets the one acceleration pattern when the arrival time of the own vehicle is equal to or greater than the passing time of the moving body, or when the arrival time of the moving body is equal to or greater than the passing time of the own vehicle.

6. The vehicle control apparatus according to claim 4, wherein when the acceleration pattern is selected and set, the acceleration pattern selecting/setting means calculates delay time which is a difference between the passing time of the moving body and the arrival time of the own vehicle when the arrival time of the own vehicle is faster than the passing time of the moving body and when the arrival time of the moving body is faster than the passing time of the own vehicle, and the acceleration pattern selecting/setting means selects and sets the acceleration pattern which is delayed by the delay time.

7. The vehicle control apparatus according to claim 4, wherein when the plurality of acceleration patterns are produced, the acceleration pattern selecting/setting means produces a strong acceleration pattern having acceleration greater than that of the one acceleration pattern, and when the acceleration pattern is selected and set, the acceleration pattern selecting/setting means calculates shortened arrival time required until the own vehicle arrives at the intersection position and shortened passing time required until the own vehicle passes the intersection position based on the expected course of the own vehicle and the strong acceleration pattern.

8. The vehicle control apparatus according to claim 5, wherein when the acceleration pattern is selected and set, the acceleration pattern selecting/setting means selects and sets the strong acceleration pattern when the arrival time of the own vehicle is faster than the passing time of the moving body and the arrival time of the moving body is faster than the passing time of the own vehicle, and when the shortened arrival time of the own vehicle is equal to or greater than the passing time of the moving body or the arrival time of the moving body is equal to or greater than the shortened passing time of the own vehicle.

9. The vehicle control apparatus according to claim 8, wherein when the acceleration pattern is selected and set, the acceleration pattern selecting/setting means calculates delay time which is a difference between the passing time of the moving body and the shortened arrival time of the own vehicle, and selects and sets a strong acceleration pattern which is obtained by delaying the former strong acceleration pattern by the delay time when the shortened arrival time of the own vehicle is faster than the passing time of the moving body and the arrival time of the moving body is faster than the shortened passing time of the own vehicle.

10. The vehicle control apparatus according to any one of claims 1 to 9, further comprising permitting means that permits operation by a driver of the own vehicle, and for permitting control to start and accelerate the own vehicle based on the permitting operation.

11. The vehicle control apparatus according to any one of claims 1 to 9, further comprising stop-determining means that detects speed of the own vehicle and carrying out stop-determination of the own vehicle, and for permitting control to start and accelerate the own vehicle based on the stop-determination.

12. The vehicle control apparatus according to any one of claims 1 to 9, wherein the externality recognizing means calculates a position of the moving body based on an image of a stereo camera provided in the own vehicle, and calculates the moving direction and the moving speed of the moving body based on time-variation of the position of the moving body.

13. The vehicle control apparatus according to claim 12, wherein the externality recognizing means recognizes the road shape based on an image of the stereo camera.
